# EUROPÄISCHE PATENTSCHRIFT

(11) **EP 1 541 887 B1**
(45) Veröffentlichungstag und Bekanntmachung des Hinweises auf die Patenterteilung: **30.08.2006**
(21) Anmeldenummer: 03028790.8
(22) Anmeldetag: 13.12.2003
(51) Int. Cl.: F16D 13/72

(54) **Vorrichtung zum Kühlen einer Reiblamellenanordnung einer Kupplung**
Clutch friction lamellae cooling device
Dispositif de réfrigération des lamelles de friction d'un embrayage

(43) Veröffentlichungstag der Anmeldung: 15.06.2005
(73) Patentinhaber: BorgWarner Inc., Auburn Hills MI 48326 (US)
(72) Erfinder: Bauer, Karl-Heinz, 76676 Graben-Neudorf (DE); Heinrich, Johannes, Dr., 61381 Friedrichsdorf (DE)
(74) Vertreter: Neunert, Peter Andreas

(56) Entgegenhaltungen:
- EP-A- 0 447 019
- DE-A- 10 151 632
- GB-A- 1 290 974
- US-A- 3 964 587

## Beschreibung

Die Erfindung betrifft eine Vorrichtung zum Kühlen einer flüssigkeitsgekühlten Reiblamellenanordnung einer Kupplung gemäß dem Oberbegriff des Patentanspruchs 1 sowie ein Verfahren zur Kühlung einer flüssigkeitsgekühlten Reiblamellenanordnung einer Kupplung gemäß dem Oberbegriff des Patentanspruchs 31.

Insbesondere Anfahrkupplungen unterliegen einer hohen Wärmebelastung und müssen daher gut gekühlt werden, um das Verbrennen der meist organischen Reibbeläge zu verhindern.

Aus dem Stand der Technik sind im wesentlichen zwei Arten zur Kühlung von Reiblamellenanordnungen von Kupplungen bekannt, nämlich die offene Kühlung mit durchströmendem Öl sowie die geschlossene Kühlung mit einem die Reiblamellenanordnung umgebenden Öltorus.

Bei der offenen Kühlung muss ein relativ hoher Strom des zur Kühlung verwendeten Öls durch die Reiblamellen geleitet werden. Auf diese Weise wird sichergestellt, dass die Reiblamellen ständig mit dem Öl in Kontakt sind, wodurch eine ausreichende Wärmeabfuhr von den Reiblamellen garantiert wird. Der Nachteil der offenen Kühlung besteht in der hohen Pumpenförderleistung, welche notwendig ist, um einen großen Ölstrom zu erreichen.

Bei der geschlossenen Kühlung, wie sie beispielsweise in der US 3,964,587, der GB 1 290 974 oder der DE 101 51 632 A1 beschrieben ist, befindet sich die Reiblamellenanordnung ständig in einem Öltorus. Der Öltorus ist aufgrund eines sehr hohen Wärmeübergangskoeffizienten in der Lage, die Reiblamellenanordnung sehr gut zu kühlen, wobei - je nach Größe des Ölvolumens und in Abhängigkeit der Anforderungen - kein oder nur wenig Kühlöl zugeführt werden muss. Das Volumen des Öltorus stellt sich im allgemeinen drehzahlabhängig ein. Der Vorteil der geschlossenen Kühlung besteht in den geringen Anforderungen an die Pumpenleistung.

Als Nachteil erweist sich bei der geschlossenen Kühlung die Schleppleistung, die bei geöffneter Kupplung vorhanden ist, bedingt durch die Viskosität des die Reiblamellen umgebenden Öls. Hierdurch wird das Trennen der Kupplung insbesondere bei niedrigen Temperaturen erschwert.

Als weiterer Nachteil sind die großen Fliehöldrücke bei hohen Drehzahlen zu nennen, welche dadurch entstehen, dass das Kühlöl mit gleicher Drehzahl wie die Reiblamellenanordnung bewegt wird. Um zu verhindern, dass die umschließenden Wände, beispielsweise des Kupplungsgehäuses, stark ausgebeult werden, müssen diese entsprechend stark dimensioniert sein. Beispielsweise betragen die Wandstärken bei Hydrowandlern zwischen 4 mm und 5 mm, um das Ausbeulen klein zu halten.

Der vorliegenden Erfindung liegt daher die Aufgabe zugrunde, eine Vorrichtung zum Kühlen einer Reiblamellenanordnung, bzw. ein Verfahren zum Kühlen einer Reiblamellenanordnung vorzuschlagen, bei der bzw. bei dem die oben aufgeführten Nachteile vermieden werden und die oben aufgeführten Vorteile vereint sind.

Die Aufgabe wird erfindungsgemäß durch eine Vorrichtung zum Kühlen einer Reiblamellenanordnung mit den Merkmalen des Patentanspruchs 1, sowie durch ein Verfahren mit den Merkmalen des Patentanspruchs 31 gelöst.

Bevorzugte Ausführungsformen und vorteilhafte Weiterbildungen sind in den Unteransprüchen aufgeführt.

Die Vorrichtung zum Kühlen einer "nassen" Reiblamellenanordnung einer Kupplung weist gattungsgemäß ein Kühlmedium auf. Bei der erfindungsgemäßen Vorrichtung sind Mittel vorhanden, durch welche die Menge des die Reiblamellenanordnung umgebenden Kühlmediums in Abhängigkeit von der Drehzahl der Reiblamellenanordnung einstellbar ist, wobei die vorliegende Erfindung auf der Idee basiert, dass die Menge des die Reiblamellenanordnung umgebenden Kühlmediums und somit auch die Kühlung der Reiblamellenanordnung, in Abhängigkeit von der Drehzahl der Reiblamellenanordnung einstellbar ist.

So ist es beispielsweise bei Anfahrkupplungen beim Anfahrvorgang - d. h. bei niederen Drehzahlen - erforderlich, die Reiblamellenanordnung aufgrund der beim Anfahrvorgang entstehenden hohen Wärmeentwicklung effektiv zu kühlen. Eine effektive Kühlung kann dadurch realisiert werden, dass bei niederen Drehzahlen die Reiblamellenanordnung nahezu vollständig vom Kühlmedium umgeben ist. Nachdem der Anfahrvorgang abgeschlossen ist, unterliegt die Reiblamellenanordnung keiner hohen Wärmebelastung mehr, so dass auf eine Kühlung der Reiblamellenanordnung im wesentlichen verzichtet werden kann. Des weiteren ist es bei hohen Drehzahlen der Reiblamellenanordnung aufgrund der obig beschriebenen Fliehöldrücke sinnvoll, wenn die Reiblamellenanordnung nicht mit dem Kühlmedium umgeben ist.

Erfindungsgemäß sind die Mittel deshalb derart ausgebildet, dass das Kühlmedium bei niederen Drehzahlen einen die Reiblamellenanordnung umgebenden Torus bildet, und dass die Reiblamellenanordnung bei hohen Drehzahlen im wesentlichen nicht von dem Kühlmedium umgeben ist.

Nach einer bevorzugten Ausführungsform stellt sich die Menge des die Reiblamellenanordnung umgebenden Kühlmediums durch Wechselwirkung zwischen der auf das Kühlmedium bei einer bestimmten Drehzahl der Reiblamellenanordnung wirkenden Zentrifugalkraft und den erfindungsgemäßen Mitteln ein.

In Verbindung mit der vorigen Ausführungsform bedeutet dies, dass die Reiblamellenanordnung bei niedrigen Drehzahlen von einem Torus aus Kühlmedium umgeben ist, da die Zentrifugalkräfte auf das Kühlmedium gering sind, und dass das Kühlmedium bei hohen Drehzahlen im wesentlichen aus dem Bereich der Reiblamellenanordnung weggeführt ist, da große Zentrifugalkräfte auf das Kühlmedium wirken.

Unter niederen Drehzahlen sind bei PKW-Verbrennungsmotoren Drehzahlen von weniger als etwa 2200 U/min zu verstehen. Unter hohen Drehzahlen sind hier Drehzahlen mit mehr als etwa 2200 U/min. gemeint. Bei einem Rennmotor beträgt die charakteristische Drehzahl etwa 5000 U/min.

Diese niedrigen bzw. hohen Drehzahlen sind im Zusammenhang mit direktem Antrieb durch übliche PKW-Verbrennungsmotoren zu sehen. So liegt die charakteristische Drehzahl zwischen niedrigen/hohen Drehzahlen z.B. bei PKW-Benzin-Motoren bei vorzugsweise ca. 25.-40% der maximalen Betriebsdrehzahl (nₘₐₓ) und bei PKW-Diesel-Motoren bei vorzugsweise ca. 40-55% der maximalen Betriebsdrehzahl (nₘₐₓ).

Es sind verschiedene Möglichkeiten denkbar, die Mittel zur Einstellung der Menge des die Reiblamellenanordnung umgebenden Kühlmediums auszubilden. Eine bevorzugte Ausführungsform der Erfindung sieht vor, dass die Mittel eine die Reiblamellenanordnung aufnehmende Trommel sowie eine Einlasseinrichtung und eine Auslasseinrichtung umfassen. Hierbei ist das Kühlmedium der Trommel über die Einlasseinrichtung zuführbar und aus der Trommel über die Auslasseinrichtung wegführbar.

Durch die erfindungsgemäßen Mittel ist es somit möglich, die Trommel bei niederen Drehzahlen so weit mit dem Kühlmedium zu befüllen, bis die Reiblamellenanordnung vom Kühlmedium umhüllt ist. Bei hohen Drehzahlen wird das Kühlmedium dagegen so weit aus der Trommel geführt, bis die Reiblamellenanordnung nicht mehr von dem Kühlmedium umgeben ist.

Vorzugsweise ist die Trommel drehfest mit der Reiblamellenanordnung verbunden. Dies ist insbesondere deshalb sinnvoll, um eine Relativbewegung zwischen Reiblamellenanordnung und dem in die Trommel aufgenommenen Kühlmedium und damit verbundene Planschverluste zu unterbinden.

Gemäß einer besonders bevorzugten Ausführungsform weist die Auslasseinrichtung Auslassöffnungen in der Trommel sowie die Einlasseinrichtung Einlassöffnungen und/oder eine Pumpe auf.

Eine mögliche Ausgestaltung der vorliegenden Erfindung sieht vor, dass die Querschnitte der Auslassöffnungen und die Querschnitte der Einlassöffnungen und/oder die Förderleistung der Pumpe aufeinander abgestimmt sind, um die Menge des die Reiblamellenanordnung umgebenden Kühlmediums abhängig von der Drehzahl der Reiblamellenanordnung einzustellen. So ist beispielsweise denkbar, dass die Querschnitte der Auslassöffnungen und die Querschnitte der Einlassöffnungen so aufeinander abgestimmt sind, dass bei niederen Drehzahlen der Reiblamellenanordnung genauso viel Kühlmedium über die Einlassöffnungen zugeführt wird wie über die Auslassöffnungen weggeführt wird, so dass die Reiblamellenanordnung bei niederen Drehzahlen von einem Torus aus Kühlmedium umhüllt ist. Bei hohen Drehzahlen wird hingegeben bei gleichem Zufluss des Kühlmediums über die Einlassöffnungen aufgrund der mit steigender Drehzahl anwachsenden Fliehkraft mehr Kühlmedium von der Reiblamellenanordnung über die Auslassöffnungen weggeführt, als dieser über die Einlassöffnungen zugeführt wird, so dass bei hohen Drehzahlen die Reiblamellenanordnung im wesentlichen nicht vom Kühlmedium umgeben ist.

Für den vorgenannten Fall ist es denkbar, dass die Querschnitte der Auslass- und der Einlassöffnungen sowohl fest sind als auch drehzahlabhängig veränderbar sind.

Alternativ oder zusätzlich können Ventileinrichtungen, z. B. Pendelschieber und/oder außengefederte Ventile und/oder innen gefederte Ventile, vorgesehen sein, mittels derer der Durchfluss durch die jeweiligen Auslass- und/oder Einlassöffnungen steuer- oder regelbar ist.

Es sind verschiedene Möglichkeiten denkbar die Trommel auszubilden. Eine bevorzugte Ausführungsform der Erfindung sieht vor, die Trommel konzentrisch zu der die Reiblamellenanordnung lagernden Drehachse anzuordnen, wobei die Stirnseiten der Trommel jeweils durch Ringe gebildet werden, welche sich in radialer Richtung zumindest im Bereich der Reiblamellenanordnung erstrecken, so dass die Trommel einen zumindest die Reiblamellenanordnung umgreifenden Hohlraum bildet.

Es ist sowohl denkbar, die Trommel als Teil von bereits in einer Kupplung vorhandenen Bauteilen auszubilden, oder aber die Trommel als zusätzliches Bauteil vorzusehen.

Nach einem ersten bevorzugten Ausführungsbeispiel wird die Trommel durch einen Abschnitt des Außenlamellenträgers und durch einen Abschnitt des mit dem Außenlamellenträger drehfest verbundenen Antriebsflansches gebildet.

Nach einem zweiten bevorzugten Ausführungsbeispiel ist die Trommel ein den Außenlamellenträger und den Antriebsflansch zumindest abschnittsweise umgreifendes separates Bauteil.

Um sicherzustellen, dass die Reiblamellenanordnung bei einer gewünschten Drehzahl im wesentlichen nicht von dem Kühlmediumtorus umhüllt wird, sieht eine Ausführungsform der Erfindung vorzugsweise vor, dass die Auslassöffnungen radial außerhalb oder im Bereich des äußeren Radius der Reiblamellenanordnung angeordnet sind. Somit wird sichergestellt, dass das gesamte Kühlmedium aus dem Bereich, in dem sich die Reiblamellenanordnung erstreckt, wegführbar ist.

Eine auf der vorherigen Ausführungsform basierende weitere Ausführungsform sieht vor, dass die Auslassöffnungen im Bereich des äußeren Radius der Trommel angeordnet sind.

Um bei geöffneter Kupplung die Schleppleistung zwischen äußeren und inneren Reiblamellen zu reduzieren ist es sinnvoll, wenn das Kühlmedium zumindest aus dem Überlappungsbereich zwischen den inneren und äußeren Reiblamellen wegführbar ist. Hierzu ist vorzugsweise vorgesehen, dass die Auslassöffnungen im Bereich des äußeren Radius der inneren Reiblamellen angeordnet sind. Durch die erfindungsgemäße Anordnung der Auslassöffnungen ist es möglich, das Kühlmedium bei einer gewünschten Drehzahl (beispielsweise einer hohen Drehzahl), aus dem Überlappungsbereich zwischen äußeren und inneren Reiblamellen zu führen.

Vorzugsweise sind die Auslassöffnungen als Drosseln oder als Blenden, d. h. als Drosselöffnungen mit nur sehr geringer Länge ausgebildet, um durch Temperaturänderungen bedingte Viskositätsänderungen des Kühlmediums und damit verändertes Strömungsverhalten des Kühlmediums durch die Auslassöffnungen möglichst zu vermeiden.

Gemäß einer bevorzugten Ausführungsform sind zwischen einer und zwanzig Auslassöffnungen, insbesondere zwischen vier und acht Auslassöffnungen an der Trommel vorhanden. Diese sind in der Regel am Mantel und/oder an zumindest einem der die Stirnseiten bildenden Ringe der Trommel äquidistant zueinander angeordnet. Somit ist die Einstellbarkeit der Menge des Kühlmediums zusätzlich durch die Anzahl der Auslassöffnungen beeinflussbar.

Die bisher beschriebenen Auslassöffnungen sind im wesentlichen im Bereich des äußeren Radius der Reiblamellenanordnung angeordnet.

Insbesondere bei Doppelkupplungen mit konzentrisch angeordneten Kupplungseinheiten, bei denen die radial äußere Kupplungseinheit eine erhöhte Temperaturbelastung erfährt, erweist sich die obige Konfiguration als nachteilig. Insbesondere bei niederen Drehzahlen wird bei notwendiger Kühlung der äußeren Kupplungseinheit zwangsläufig auch die innere Kupplungseinheit vom Kühlmedium umhüllt. Demzufolge sieht eine bevorzugte Ausführungsform der Erfindung vor, dass die Auslasseinrichtung Überlauföffnungen ausweist, welche in radialer Richtung näher an der Drehachse angeordnet sind als die Auslassöffnungen.

Durch die erfindungsgemäßen Merkmale wird erreicht, dass sich ein Torus aus Kühlmedium nur in dem Bereich ausbilden kann, der sich radial zwischen den Auslassöffnungen und den Überlauföffnungen erstreckt. Sind insbesondere die Überlauföffnungen im Bereich des inneren Radius der Reiblamellenanordnung und die Auslassöffnungen im Bereich des äußeren Radius der Reiblamellenanordnung angeordnet, so wird erreicht, dass nur die Reiblamellenanordnung vom Torus aus Kühlmedium umgeben werden kann. Somit ist die äußere Kupplungseinheit unabhängig und ohne Beeinflussung der inneren Kupplungseinheit kühlbar.

Vorzugsweise sind die Überlauföffnungen an zumindest einem der die Stirnseiten bildenden Ringe der Trommel angeordnet.

Insbesondere um die Herstellung einfach und damit kostengünstig zu gestalten, sieht eine bevorzugte Ausführungsform der Erfindung vor, dass alle Überlauföffnungen und/oder alle Auslassöffnungen jeweils auf dem gleichen Radius in Bezug zur Drehachse angeordnet sind.

Nach einer weiteren bevorzugten Ausführungsform sind die Auslassöffnungen und die Überlauföffnungen derart aufeinander abgestimmt, dass bei niederen Drehzahlen ein großer Teil des zugeführten Kühlmediums, insbesondere 60% bis 100%, über die Überlauföffnungen wegführbar ist, und dass bei hohen Drehzahlen das gesamte zugeführte Kühlmedium über die Auslassöffnungen wegführbar ist.

Eine konkrete Ausgestaltung dieser Ausführungsform besteht darin, dass bei niederen Drehzahlen das über die Einlasseinrichtung zufließende Kühlmedium im wesentlichen durch die Trommel aufgefangen wird. Somit kann sich im Bereich der Reiblamellen ein Torus aus Kühlmedium vom Mantel der Trommel in radialer Richtung bis zu den Überlauföffnungen aufbauen. Hat die Füllhöhe des Kühlmediums die Überlauföffnungen erreicht, strömt das weiter zufließende Kühlmedium zum größten Teil über die Überlauföffnungen ab. Nur ein geringer Anteil verlässt die Trommel über die radial weiter außen liegenden Auslassöffnungen. Mit steigender Drehzahl verschieben sich die Anteile des weggeführten Kühlmediums, die durch die Überlauföffnungen und die Auslassöffnungen fließen, da mit steigender Drehzahl der hydraulische Druck quadratisch mit der Drehzahl und quadratisch mit der Entfernung von der Drehachse zunimmt. Somit fließt bei hoher Drehzahl der Großteil bzw. das gesamte zugeführte Kühlmedium über die Auslassöffnungen ab.

Wie bei den Einlass- und/oder Auslassöffnungen kann vorgesehen werden, dass die Querschnitte der Überlauföffnungen drehzahlabhängig veränderbar sind.

Es können wiederum z. B. als Pendelschieber und/oder außen- bzw. innen gefederte Ventile ausgebildete Ventileinrichtungen vorgesehen werden, mittels derer der Durchlass durch die Überlauföffnungen regelbar oder steuerbar ist.

Durch die erfindungsgemäße Vorrichtung zum Kühlen einer Reiblamellenanordnung einer Kupplung ist die Menge an Kühlmedium, welche zur effektiven Kühlung der Reiblamellenanordnung zugeführt werden muss, bedeutend geringer, als bei den aus dem Stand der Technik bekannten offenen Kühlungen. Nach einer bevorzugten Ausführungsform der Erfindung ist vorgesehen, dass der Trommel ein Kühlmediumfluss von 3 1/min. bis 15 1/min., insbesondere von 4 1/min. bis 7 1/min. zugeführt wird.

Vorteilhafterweise findet die obig beschriebene erfindungsgemäße Vorrichtung zum Kühlen einer Reiblamellenanordnung in einer Doppelkupplung Verwendung.

Hierbei handelt es sich vorzugsweise um eine Doppelkupplung mit konzentrischer Anordnung der beiden Kupplungseinheiten.

Vorteilhafterweise findet die erfindungsgemäße Vorrichtung zur Kühlung einer Anfahrkupplung des Doppelkupplungssystems Verwendung.

Das erfindungsgemäße Verfahren zum Kühlen einer Reiblamellenanordnung einer Kupplung mittels eines Kühlmediums sieht vor, dass bei niederen Drehzahlen die Menge des Kühlmediums so eingestellt wird, dass das Kühlmedium die Reiblamellenanordnung im wesentlichen vollständig umgibt und dass bei hohen Drehzahlen die Menge des Kühlmediums so eingestellt wird, dass die Reiblamellenanordnung im wesentlichen nicht von dem Kühlmedium umgeben ist.

Eine Ausgestaltung des erfindungsgemäßen Verfahrens weist darüber hinaus die Merkmale auf, dass die Menge des die Reiblamellenanordnung umgebenden Kühlmediums in Abhängigkeit des der Reiblamellenanordnung zugeführten und von dieser weggeführten Kühlmediums eingestellt wird, wobei die Menge des weggeführten Kühlmediums mit durch die auf das Kühlmedium wirkende Zentrifugalkraft beeinflusst wird.

Nachfolgend wird die Erfindung anhand von bevorzugten Ausführungsbeispielen auf der Basis von schematischen Zeichnungen näher erläutert. Es zeigen
- Figur 1: ein erstes Ausführungsbeispiel einer erfindungsgemäßen Vorrichtung zum Kühlen einer Reiblamellenanordnung,
a) System bei niedriger Drehzahl
b) System bei hoher Drehzahl
Die Auslassöffnungen sind als Drosseln ausgebildet,
- Figur 2: ein zweites Ausführungsbeispiel einer erfindungsgemäßen Vorrichtung zum Kühlen einer Reiblamellenanordnung,
a) System bei niedriger Drehzahl
b) System bei hoher Drehzahl
Die Auslassöffnungen sind als Blenden ausgebildet,
- Figur 3: eine Detailansicht eines dritten Ausführungsbeispiels entsprechend dem ersten Ausführungsbeispiel gemäß der Figur 1 oder entsprechend dem zweiten Ausführungsbeispiel gemäß der Figur 2 im Schnitt X-Y.
Die Verbindungsöffnungen sind als Schlitze ausgebildet,
- Figur 4: eine Detailansicht eines vierten Ausführungsbeispiels entsprechend dem ersten Ausführungsbeispiel gemäß der Figur 1 oder entsprechend dem zweiten Ausführungsbeispiel gemäß der Figur 2 im Schnitt X-Y.
Die Verbindungsöffnungen sind als Bohrungen ausgebildet,
- Figur 5: ein fünftes Ausführungsbeispiel einer erfindungsgemäßen Vorrichtung zum Kühlen einer Reiblamellenanordnung System bei niedriger Drehzahl,
- Figur 6: Detailansicht des fünften Ausführungsbeispiels gemäß der Figur 5 im Schnitt X-Y.
Die Öffnungen im äußeren Lamellenträger sind als Schlitze ausgebildet,
- Figur 7: Detailansicht eines sechsten Ausführungsbeispiels entsprechend der Figur 5 im Schnitt A-B.
Die Öffnungen im inneren Lamellenträger sind als Bohrungen ausgebildet,
- Figur 8: Axialkraft eines Öltorus einer geschlossenen Kühlung gemäß dem Stand der Technik,
- Figur 9: Axialkraft und innerer Radius von erfindungsgemäßen Vorrichtungen zum Kühlen einer Reiblamellenanordnung entsprechend den Figuren 1, 2 und 5.
- Figur 10: ein siebentes Ausführungsbeispiel einer erfindungsgemäßen Vorrichtung zum Kühlen einer Reiblamellenanordnung. Dargestellt ist das System bei niedriger Drehzahl.
Es ist eine als Pendelschieber ausgebildete drehzahlabhängige Auslasseinrichtung vorgesehen.
- Figur 11: Detailansicht des Pendelschiebers gemäß der Figur 10.
- Figur 12: Detailansicht eines achten Ausführungsbeispiels einer erfindungsgemäßen Vorrichtung zum Kühlen einer Reiblamellenanordnung.
Der Pendelschieber entsprechend Figur 10 ist durch eine andere Ausführungsvariante eines Pendelschiebers mit integriertem Federelement ersetzt.
- Figur 13: Detailansicht eines neunten Ausführungsbeispiels einer erfindungsgemäßen Vorrichtung zum Kühlen einer Reiblamellenanordnung.
Der Pendelschieber entsprechend Figur 10 ist durch ein außen gefedertes Ventil ersetzt.
- Figur 14: Detailansicht eines zehnten Ausführungsbeispiels einer erfindungsgemäßen Vorrichtung zum Kühlen einer Reiblamellenanordnung.
Das außen gefederte Ventil entsprechend Figur 13 ist durch ein innen gefedertes Ventil ersetzt.
- Figur 15: Detailansicht eines elfen Ausführungsbeispiels einer erfindungsgemäßen Vorrichtung zum Kühlen einer Reiblamellenanordnung.
Es ist ein innen gefedertes Ventil als drehzahlabhängige Auslasseinrichtung vorgesehen. Die Federung des innen gefederten Ventils ist mittels einer Blattfeder realisiert.
- Figur 16: Detailansicht des elften Ausführungsbeispiels einer erfindungsgemäßen Vorrichtung zum Kühlen einer Reiblamellenanordnung.
Es ist ein innen gefedertes Ventil als drehzahlabhängige Auslasseinrichtung vorgesehen. Die Federung des innen gefederten Ventils ist mittels einer Blattfeder realisiert.
- Figur 17: Detailansicht eines zwölften Ausführungsbeispiels einer erfindungsgemäßen Vorrichtung zum Kühlen einer Reiblamellenanordnung.
Es ist ein innen gefedertes Ventil als drehzahlabhängige Auslasseinrichtung vorgesehen. Die Federung des innen gefederten Ventils ist mittels einer Blattfeder realisiert.
- Figur 18: Detailansicht eines dreizehnten Ausführungsbeispiels einer erfindungsgemäßen Vorrichtung zum Kühlen einer Reiblamellenanordnung.
Es ist ein innen gefedertes Ventil als drehzahlabhängige Auslasseinrichtung vorgesehen. Die Federung des innen gefederten Ventils ist mittels einer Biegefeder realisiert.
- Figur 19: Detailansicht eines vierzehnten Ausführungsbeispiels einer erfindungsgemäßen Vorrichtung zum Kühlen einer Reiblamellenanordnung.
Es ist ein außen gefedertes Ventil als drehzahlabhängige Auslasseinrichtung vorgesehen. Die Federung des außen gefederten Ventils ist mittels einer Biegefeder realisiert.
a) Längsschnitt
b) Querschnitt

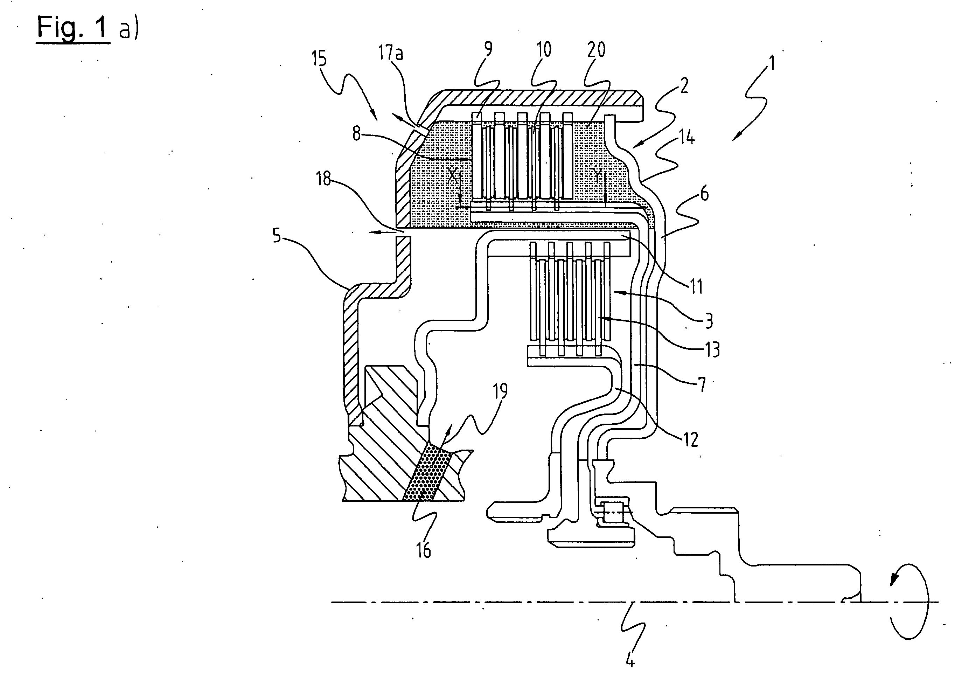

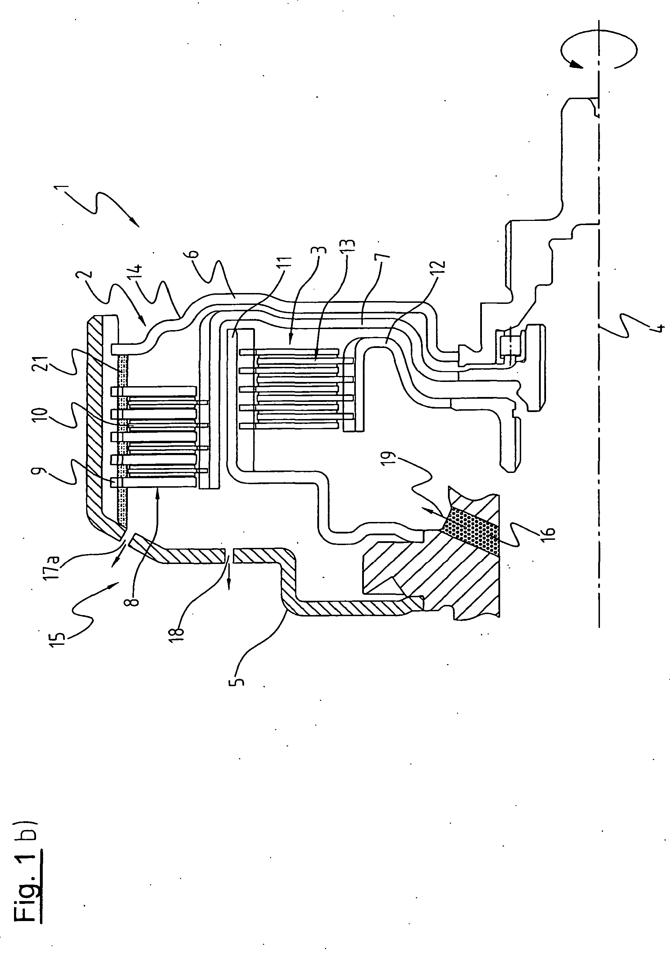

Die Figuren 1a und 1b zeigen ein Doppelkupplungssystem 1 mit einer äußeren Kupplungseinheit 2 sowie einer inneren Kupplungseinheit 3. Die äußere Kupplungseinheit 2 und die innere Kupplungseinheit 3 sind konzentrisch bezüglich einer Drehachse 4 des Doppelkupplungssystems 1 angeordnet.

Der Übersichtlichkeit halber soll im folgenden nur auf die für die Erfindung wesentlichen Merkmale des Doppelkupplungssystems 1 eingegangen werden.

Die äußere Kupplungseinheit 2 umfasst einen äußeren Lamellenträger 5, welcher drehfest mit einem Antriebsflansch 6 verbunden ist. Des weiteren umfasst die äußere Kupplungseinheit 2 einen inneren Lamellenträger 7. Zwischen dem äußeren Lamellenträger 5 und dem inneren Lamellenträger 7 ist eine Reiblamellenanordnung 8 angeordnet. Die Reiblamellenanordnung 8 weist äußere Reiblamellen 9 sowie innere Reiblamellen 10 auf, die jeweils in Richtung der Drehachse 4 abwechselnd hintereinander liegend angeordnet sind. Hierbei sind die äußeren Reiblamellen 9 drehfest mit dem äußeren Lamellenträger 5 sowie die inneren Reiblamellen 10 drehfest mit dem inneren Lamellenträger 7 verbunden.

Die innere Kupplungseinheit 3 weist einen äußeren Lamellenträger 11 sowie einen inneren Lamellenträger 12 auf. Zwischen dem äußeren Lamellenträger 11 und dem inneren Lamellenträger 12 ist eine Reiblamellenanordnung 13 angeordnet.

Die erfindungsgemäßen Mittel, durch welche die Menge des die Reiblamellenanordnung 8 umgebenden Kühlmediums in Abhängigkeit von der Drehzahl der Reiblamellenanordnung 8 einstellbar ist, werden im vorliegenden Ausführungsbeispiel durch eine Trommel 14 sowie durch eine Auslasseinrichtung 15 und eine Einlasseinrichtung 16 gebildet.

Die Trommel 14 umfasst einen Abschnitt des äußeren Lamellenträgers 5 (Mantel und ringförmiger Abschnitt der Stirnseite), sowie einen Abschnitt des Antriebsflansches 6 (ringförmiger Abschnitt), so dass ein die Reiblamellenanordnung 8 umgreifender Hohlraum geschaffen wird, welcher sich in radialer Richtung im wesentlichen zwischen äußerem Lamellenträger 5 und innerem Lamellenträger 7 der äußeren Kupplungseinheit 2, nicht aber in den Bereich der inneren Kupplungseinheit 3 erstreckt.

Die Auslasseinrichtung 15 besteht aus mehreren Auslassöffnungen 17a sowie aus mehreren Überlauföffnungen 18, die jeweils auf dem gleichen Radius in Bezug zur Drehachse 4 angeordnet sind. Die Auslassöffnungen 17a sind jeweils zueinander gleich beabstandet, wobei im vorliegenden Ausführungsbeispiel sechs Auslassöffnungen 17a und sechs Überlauföffnungen 18 vorgesehen sind, von denen jeweils eine zu erkennen ist. Im vorliegenden Ausführungsbeispiel sind die Auslassöffnungen 17a als Drosseln 17a ausgebildet. Des weiteren sind die Auslassöffnungen 17a im Bereich des äußeren Radius der Reiblamellenanordnung angeordnet.

Die Überlauföffnungen 18 sind in radialer Richtung näher an der Drehachse 4 angeordnet, als die Auslassöffnungen 17a.

Wird ein Kühlmedium 19 über die Einlasseinrichtung 16 dem Doppelkupplungssystem 1 zugeführt, so kann dieses durch die Auslassöffnungen 17a sowie die Überlauföffnungen 18 aus dem Bereich der Reiblamellenanordnung 8 der äußeren Kupplungseinheit 2 weggeführt werden (wie durch die Pfeile dargestellt).

Die Figur 1a zeigt das Doppelkupplungssystem 1 bei niedriger Drehzahl, d. h. bei einer Drehzahl von weniger als 2200 U/min.

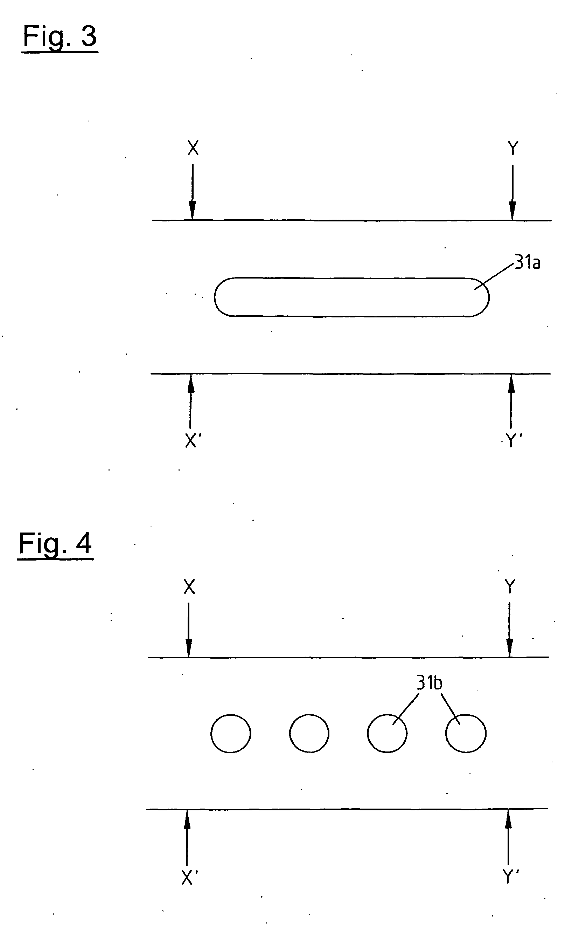

Aufgrund der auf das Kühlmedium 19 einwirkenden Zentrifugalkraft wird dieses nach Einlass über die Einlasseinrichtung 16 und Öffnungen, wie z. B. Schlitze 31a (wie bei dem Ausführungsbeispiel gemäß der Figur 3) oder Bohrungen 31b (wie bei dem Ausführungsbeispiel gemäß der Figur 4), im Lamellenträger 7 zuerst in den Bereich des äußeren Radius der Trommel 14 geschleudert, so dass sich ein die Reiblamellenanordnung 8 umhüllender Torus aus Kühlmedium radial gerichtet in Richtung der Drehachse 4 aufbauen kann. Hierbei sind die Einlasseinrichtung 16 sowie die Auslassöffnungen 17a und die Überlauföffnungen 18 der Auslasseinrichtung 15 derart aufeinander abgestimmt, dass bei niederen Drehzahlen bei Erreichen der Füllhöhe der Überlauföffnungen 18 der größte Anteil des zugeführten Kühlmediums 19 über die Überlauföffnungen 18 weggeführt wird, so dass sich der Torus aus Kühlmedium 20 in radialer Richtung lediglich zwischen äußerem Radius der Reiblamellenanordnung 8 und den Überlauföffnungen 18 erstreckt. Die Abstimmung zwischen Auslasseinrichtung 15 und Einlasseinrichtung 16 erfolgt im vorliegenden Ausführungsbeispiel über die Größe der Querschnitte der Auslassöffnungen 17a und der Überlauföffnungen 18, über die Anzahl der Auslassöffnungen 17a bzw. der Überlauföffnungen 18 sowie über die Menge des über die Einlasseinrichtung 16 zugeführten Kühlmediums 19. Im Resultat wird bei der vorliegenden Ausführungsform beispielsweise erreicht, dass bei niederen Drehzahlen von 6 l/min. zugeführtem Kühlmedium bis zu 5 l/min. über die Überlauföffnungen 18 sowie maximal 1 l/min. über die Auslassöffnungen 17 weggeführt werden.

Mit steigender Drehzahl verschieben sich die Anteile des über die Auslassöffnungen 17a und über die Überlauföffnungen 18 weggeführten Kühlmediums, da sich der hydrostatische Druck proportional zum Quadrat der Drehzahl und proportional zum Quadrat des Abstandes zur Drehachse 4 verändert: So wird mit steigender Drehzahl das Kühlmedium 19 im wesentlichen über die Auslassöffnungen 17a aus der Trommel 14 weggeführt.

Wie in der Figur 1b zu erkennen ist, hat sich der die Reiblamellenanordnung 8 bei niederer Drehzahl vollständig umhüllende Torus 20 bei hoher Drehzahl nahezu vollständig abgebaut, so dass lediglich ein sich in radialer Richtung zwischen dem äu-ßeren Radius des äußeren Lamellenträgers 5 und den Auslassöffnungen 17a erstreckender Ölring 21 vorhanden ist, der die Reiblamellenanordnung 8 nicht umgibt.

Wird der Motor abgestellt, d. h. die mit dem Motor drehfest verbundene Trommel 14 ist zum Stillstand gebracht und über die Einlasseinrichtung 16 wird kein Kühlmedium zugeführt, entleert sich der Topf über die Auslassöffnungen 17a.

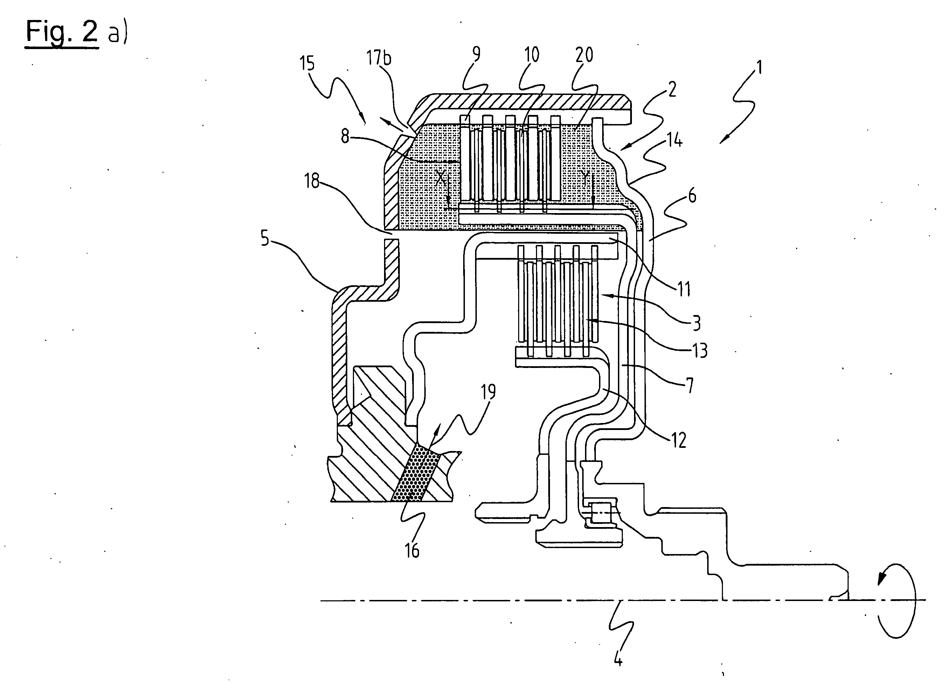

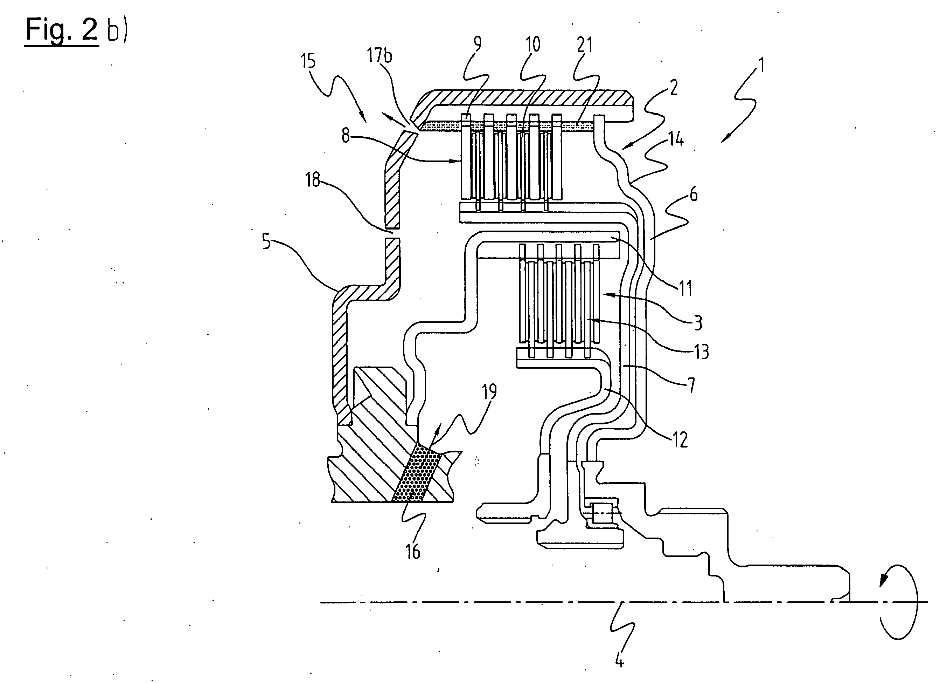

Die Figuren 2a und 2b zeigen ein zweites Ausführungsbeispiel eines Doppelkupplungssystems 1. Figur 2a zeigt das System 1 bei niedriger Drehzahl, Figur 2b zeigt das System 1 bei hoher Drehzahl.

Abweichend von dem Doppelkupplungssystem 1 nach Ausführungsbeispiel eins sind die Auslassöffnungen nicht als Drosseln 17a, sondern als Blenden 17b, d. h. als Drosseln mit konischem Querschnitt, ausgebildet.

In ähnlicher Weise könnten auch die Drosselöffnungen 18 durch Blendenöffnungen ersetzt sein.

Die Öffnungen im Lamellenträger 7 können als Schlitze 31a (entsprechend Figur 3), als Bohrungen 31b (entsprechend Figur 4) oder in sonstiger Weise ausgebildet sein.

Es versteht sich für den Fachmann von selbst, dass auch der äußere oder der innere Lamellenträger 11, 12 der inneren Kupplungseinheit 3 einen Durchlass ermöglichende Öffnungen (gegebenenfalls in o. a. Art) aufweist.

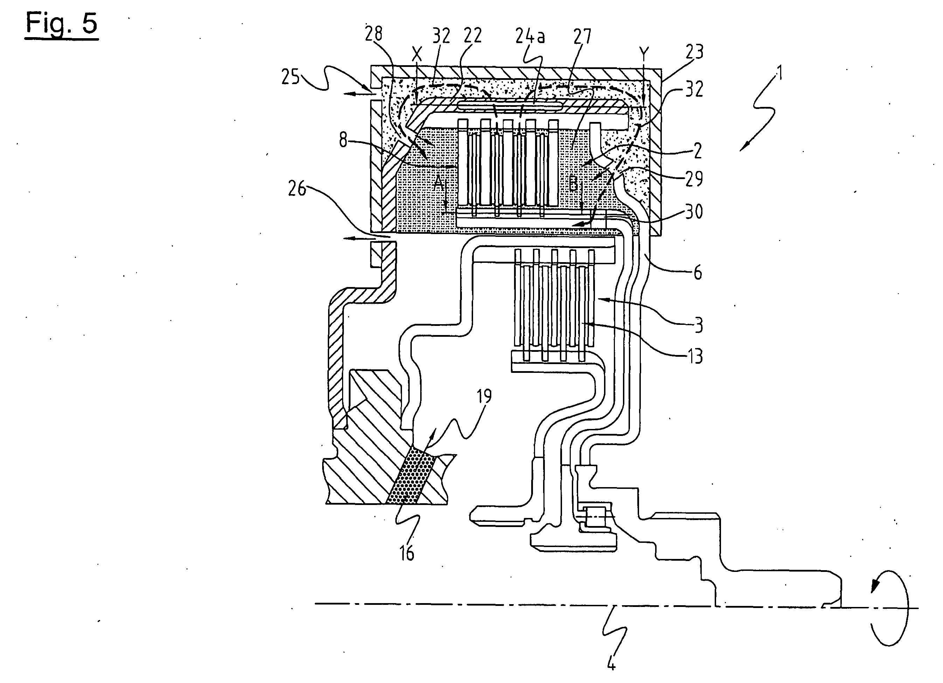

Die Figur 5 zeigt ein fünftes Ausführungsbeispiel der Erfindung in abschnittsweiser Darstellung im Längsschnitt. Wie aus der Figur 5 zu erkennen ist, weist das Doppelkupplungssystem 1 die aus der Figur 1 bekannten äußeren und inneren Kupplungseinheiten 2 und 3 auf.

Die äußere Kupplungseinheit 2 weist einen äußeren Lamellenträger 22 sowie den aus der Figur 1 bekannten Antriebsflansch 6 auf. Des weiteren ist eine Trommel 23 vorgesehen, welche den äußeren Lamellenträger 22 und den Antriebsflansch 6 zumindest abschnittsweise dergestalt umgreift, dass die Reiblamellenanordnung 8 vollständig in der Trommel 23 aufgenommen wird.

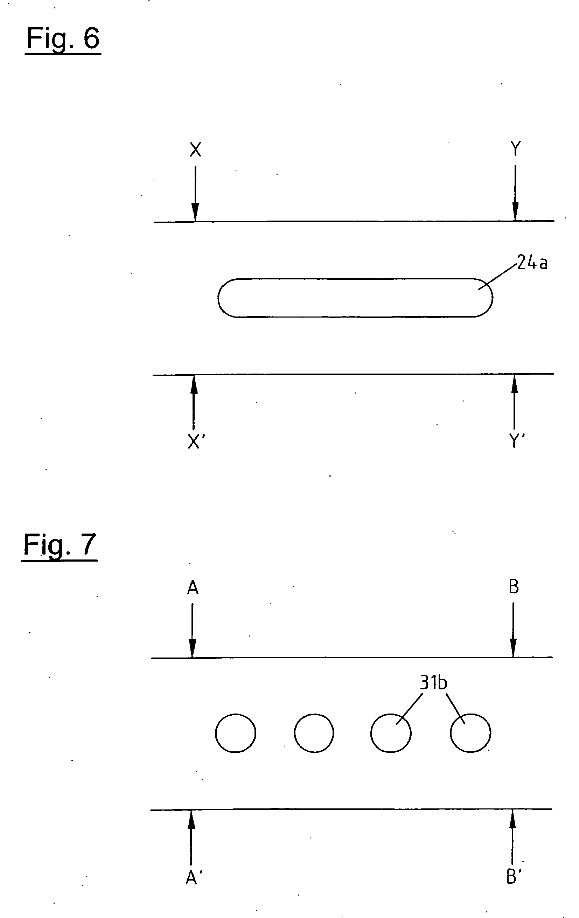

Die Trommel 23 ist als zu dem äußeren Lamellenträger 22 und zu dem Antriebsflansch 6 separates Bauteil ausgeführt. Hierbei ist die Trommel 23 drehfest mit dem äußeren Lamellenträger 22 und dem Antriebsflansch 6 verbunden. Der äußere Lamellenträger 22 weist auf seinem Mantel mehrere sich im wesentlichen über die gesamte Länge des äußeren Lamellenträgers 22 erstreckende schlitzartige Ausnehmungen 24a auf (Figur 6). In ähnlicher Weise weist auch der innere Lamellenträger 7 schlitzartige Ausnehmungen 31a auf, wie sie z. B. in der Figur 3 dargestellt sind.

Da die schlitzartigen Ausnehmungen 24a, 31a einen Großteil der Fläche des Mantels des äußeren bzw. inneren Lamellenträgers 22, 7 ausmachen, wird über die Einlasseinrichtung 16 zufließendes Kühlmedium 19 nicht durch den äußeren bzw. inneren Lamellenträger 22, 7 aufgefangen, sondern strömt im wesentlichen durch die schlitzartigen Ausnehmungen 24a, 31a hindurch und wird durch die Trommel 23 aufgefangen.

Die Trommel 23 weist des weiteren Auslassöffnungen 25 und Überlauföffnungen 26 auf, welche beispielhaft als Drosseln ausgebildet sind. Die Auslassöffnungen 25 sind im Bereich des äu-ßeren Radius der Trommel 23 angeordnet. Die Überlauföffnungen 26 sind im Bereich des inneren Radius der äußeren Reiblamellenanordnung 2 angeordnet.

Durch gegebenenfalls optional zusätzlich vorgesehene Verbindungsöffnungen 28, 29, 30 wird eine Zirkulation des Kühlmittels innerhalb des Topfes ermöglicht, wodurch der Wärmeaustausch noch weiter verbessert wird (auch die übrigen Ausführungsbeispiele können selbstverständlich in entsprechender Weise ausgestaltet sein). Die Zirkulation wird getrieben durch die Pumpwirkung der genuteten Lamellen, die das Kühlmittel tendenziell nach außen bescheunigen (siehe gestrichelte Pfeile 32).

Die Figur 5 zeigt das Doppelkupplungssystem bei niederer Drehzahl, so dass das Kühlmedium 19 einen die Reiblamellenanordnung 8 umgebenden Torus 27 aus Kühlmedium 19 bildet. Vom zugeführten Kühlmedium 19 wird, analog zu Figur 1a, der Großteil des weggeführten Kühlmediums 19 über die Überlauföffnungen 26 weggeführt.

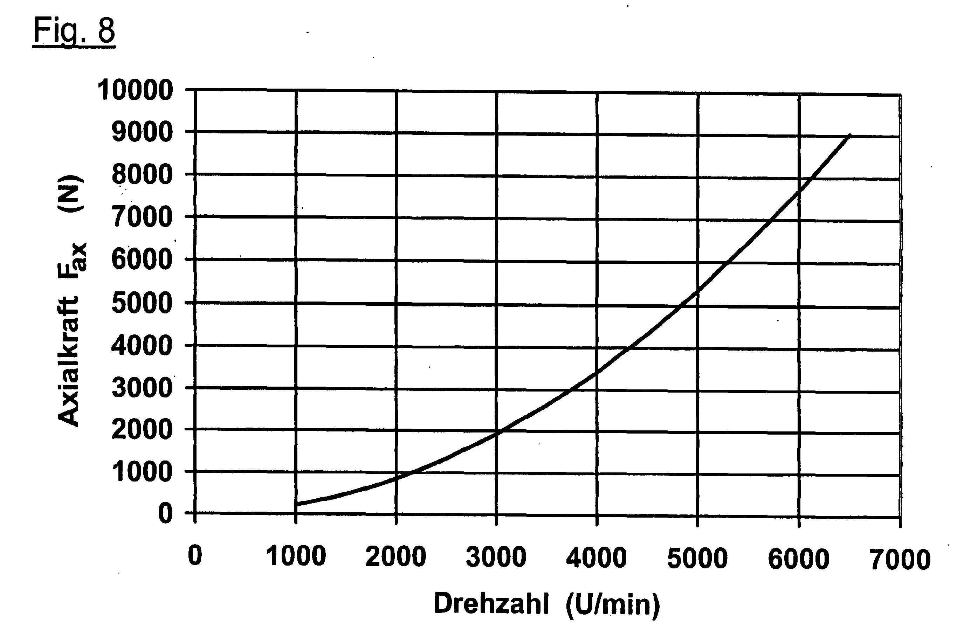

Die Figur 8 zeigt den Verlauf der Axialkräfte, die in Abhängigkeit von der Drehzahl auf ein Kupplungsgehäuse eines herkömmlichen Kupplungssystems mit geschlossener Kühlung wirken.

Wie aus der Figur 8 zu erkennen ist, beträgt die Axialkraft bei 6000 U/min. nahezu 8000 N.

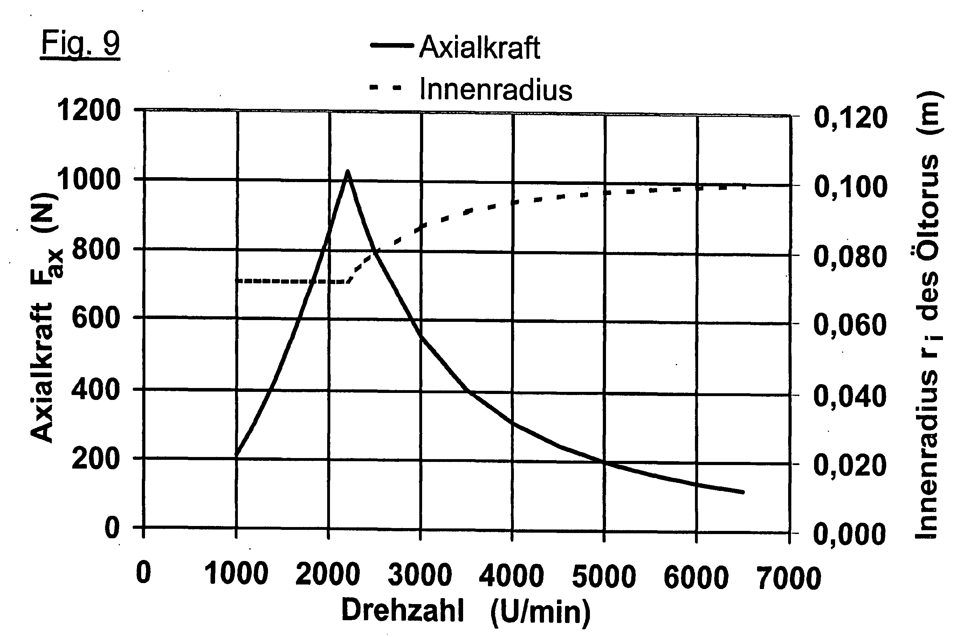

Die Figur 9 zeigt den Verlauf der Axialkraft sowie den Verlauf des inneren Radius des Torus aus Kühlmedium bei einem Kupplungssystem mit einer erfindungsgemäßen Vorrichtung zum Kühlen einer Reiblamellenanordnung entsprechend den Figuren 1, 2 oder 5.

Unterhalb einer charakteristischen Drehzahl (ca. 2200 U/min.) fließt zugeführtes überschüssiges Kühlmedium über die Überlauföffnungen ab. Bis zur charakteristischen Drehzahl kann sich demzufolge kein Torus aus Kühlmedium aufbauen, dessen innerer Radius kleiner ist als der radiale Abstand der Überlauföffnungen von der Drehachse.

Bis zur charakteristischen Drehzahl nimmt des weiteren die Axialkraft quadratisch mit der Drehzahl zu.

Oberhalb der charakteristischen Drehzahl fließt das gesamte Kühlmedium nur noch über die Auslassöffnungen ab. Demzufolge vergrößert sich der Innenradius des Torus aus Kühlmedium wobei der Druck im Bereich des Außenradius des äußeren Lamellenträgers konstant bleibt und die Druckverteilung dementsprechend steiler wird. Die axial beaufschlagte Druckfläche wird kleiner und somit nehmen die wirksamen Axialkräfte ab. Wie aus der Figur 4 zu erkennen ist, beträgt die Axialkraft bei 6000 U/min. lediglich 200 N.

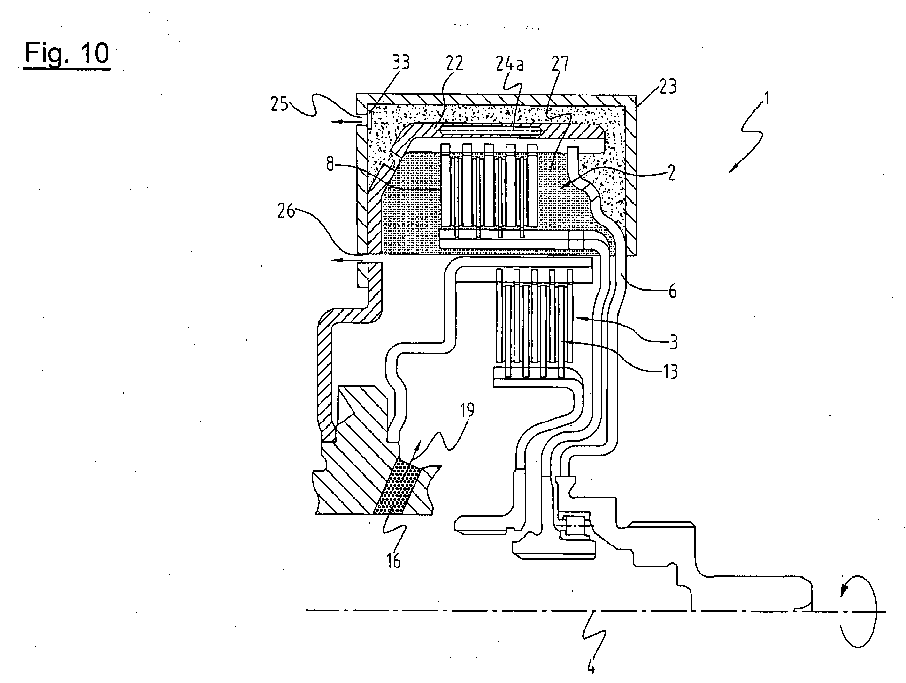

Figur 10 zeigt ein siebentes Ausführungsbeispiel einer erfindungsgemäßen Vorrichtung zum Kühlen einer Reiblamellenanordnung. Diese Vorrichtung ist nahezu identisch ausgebildet, wie das nach dem fünften Ausführungsbeispiel gemäß der Figur 5.

Gleiche Bestandteile der Vorrichtung sind demzufolge mit gleichen Bezugszeichen versehen.

Bei dem Ausführungsbeispiel gemäß der Figur 10 ist die Auslassöffnung im Gegensatz zum Ausführungsbeispiel gemäß der Figur 5 zusätzlich mit einer drehzahlabhängigen Auslasseinrichtung ausgestattet. Die drehzahlabhängige Auslasseinrichtung ist im vorliegenden Ausführungsbeispiel als sogenannter Pendelschieber 33 ausgebildet.

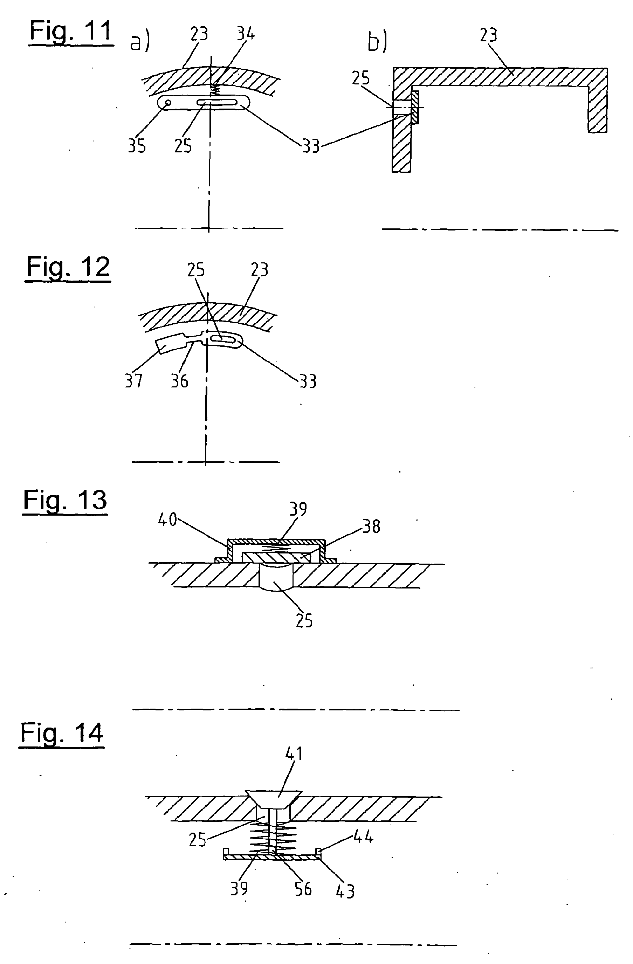

Die Figur 11 zeigt eine Detailansicht dieses Pendelschiebers. Insbesondere zeigt Figur 11 b) die Trommel 23 des Doppelkupplungssystems 1 gemäß der Figur 10 im Axialschnitt. Korrespondierend hierzu zeigt die Figur 11 a) im Radialschnitt in Draufsicht die Trommel 23 mit erfindungsgemäßem, die Auslassöffnung 25 verdeckendem Pendelschieber 33.

Es versteht sich von selbst, dass dieses Ausführungsbeispiel, wie auch alle folgenden, nicht auf die Anordnung in der Trommel 23 beschränkt ist, sondern sich auch in der Trommel 14 an geeigneter Stelle anordnen lässt.

Insbesondere der Figur 11 a) ist zu entnehmen, dass der Pendelschieber 33 an der innenseitigen Stirnfläche der Trommel 23 mittels eines Gelenks 35 angelenkt ist. Anderenendseitig stützt sich der Pendelschieber 33 gegen ein vorliegend als Schraubenfeder 34 ausgebildetes Federelement ab, welches sich selbst gegen die Innenwandung des Mantels der Trommel 23 abstützt.

Bei niedrigen Drehzahlen wird der Pendelschieber 33 entgegen der Federkraft des Federelements 34 in der in der Figur 11 dargestellten Position gehalten. Mit zunehmender Drehzahl erhöht sich die auf den Pendelschieber 33 wirkende Fliehkraft. Dadurch bewegt sich das freie Ende des Pendelschiebers 33 entgegen der Federkraft des Federelements 34 in radialer Richtung nach außen und gibt dabei einen zunehmenden Querschnitt der Auslassöffnung 25 frei.

Der Figur 12 ist eine Detailansicht eines achten Ausführungsbeispiels einer erfindungsgemäßen Vorrichtung zum Kühlen einer Reiblamellenanordnung zu entnehmen.

Bei dieser Ausführungsvariante ist der Pendelschieber, wie er beim Ausführungsbeispiel entsprechend der Figur 10 verwendet wurde, durch eine andere Ausführungsvariante eines Pendelschiebers 33 mit integriertem Federelement ersetzt. Der Pendelschieber 33 entsprechend der Figur 12, ist im Querschnitt hantelförmig ausgebildet. Einendseitig ist der Pendelschieber 33 über eine Fixierung (Vernietung, Verschweißung, Verklebung oder dergleichen) an der inneren Stirnfläche der Trommel 23 befestigt. Anderenendseitig überdeckt der Pendelschieber 33 bei kleinen Drehzahlen, wie in der Figur 12 dargestellt, die Auslassöffnung 25.

Die im Querschnitt hantelförmige Gestalt des Pendelschiebers 33 hat zur Folge, dass die die Auslassöffnung 25 überdeckende Seite des Pendelschiebers 33 in der Art eines Federgelenks 36 mit der an der Trommel 23 befestigten Seite des Federelements 33 angelenkt ist. Mit zunehmender Drehzahl wird die Auslassöffnung 25 entgegen der Federwirkung des Federgelenks 36 zunehmend freigegeben.

Die Figur 13 zeigt eine Detailansicht eines neunten Ausführungsbeispiels einer erfindungsgemäßen Vorrichtung zum Kühlen einer Reiblamellenanordnung. In diesem Ausführungsbeispiel sind die Pendelschieber entsprechend den Figuren 10 bis 12 durch ein sogenanntes außen gefedertes Ventil 38 ersetzt. Der Ventilkopf des Ventils 38 wird durch einen die Auslassöffnung 25 übergreifenden Bügel 40 gehalten und mittels eines als Schraubenfeder 39 ausgebildeten Federelements bei geringen Drehzahlen gegen die Auslassöffnung 25 gehalten. Mit zunehmender Drehzahl steigt der Öldruck des Öltorus in der Trommel 23 an, so dass eine zunehmende Kraft auf die Innenseite des Ventilkörpers des Ventils 38 wirkt. Dieser Ventilkörper wird dadurch mit zunehmendem Druck und unter zunehmender eigener Fliehkraft und damit zunehmender Kraftwirkung entgegen der Federkraft des Federelements 39 geöffnet, so dass die Auslassöffnung 25 mit zunehmender Drehzahl zunehmend freigegeben wird und ein Abfließen von Öl ermöglicht wird.

Figur 14 zeigt eine Detailansicht eines zehnten Ausführungsbeispiels einer erfindungsgemäßen Vorrichtung zum Kühlen einer Reiblamellenanordnung. Bei diesem Ausführungsbeispiel ist das außen gefederte Ventil 38 entsprechend der Figur 13 durch ein innen gefedertes Ventil 41 ersetzt. Der Ventilkörper des Ventils 41 sitzt wie im vorstehend beschriebenen Beispiel wieder auf der Außenwandung der Trommel 23 auf. Auf der Innenseite dieses Ventilkörpers ist ein Stößel 56 angebracht, welcher die Auslassöffnung 25 zentral durchsetzt. Endseitig trägt dieser Stößel 56 einen Bügel 43. Der Bügel 43 trägt wiederum in Richtung auf die Innenwandung der Stirnfläche der Trommel 23 ausgerichtete Füßchen 44. Weiterhin ist die Innenseite des Bügels 43 mittels eines Federelements 39 gegen die Innenwandung der Stirnseite der Trommel 23, das Ventil 41 in die Schließstellung verbringend abgestützt. Mit zunehmender Drehzahl erhöht sich wie vorstehend beschrieben der Öldruck innerhalb der Trommel 23. Dadurch sowie durch die zunehmende Fliehkräfte der Ventilkomponenten wirkt eine in Richtung der Stirnseite der Trommel 23 wirkende Kraft auf den Bügel 43. Der Bügel 43 wird dadurch entgegen der Kraft des Federelements 39 in Richtung der Stirnwandung der Trommel 23 gedrückt, was wiederum zur Folge hat, dass sich der Ventilkörper des Ventils 41 von seinem Sitz löst und die Öffnung 25 zunehmend freigibt. Die Füßchen 44 verhindern, dass der Bügel 43 gegen die Innenwandung der Stirnseite der Trommel 23 gedrückt wird und die Öffnung 25 von Innen her verschließt.

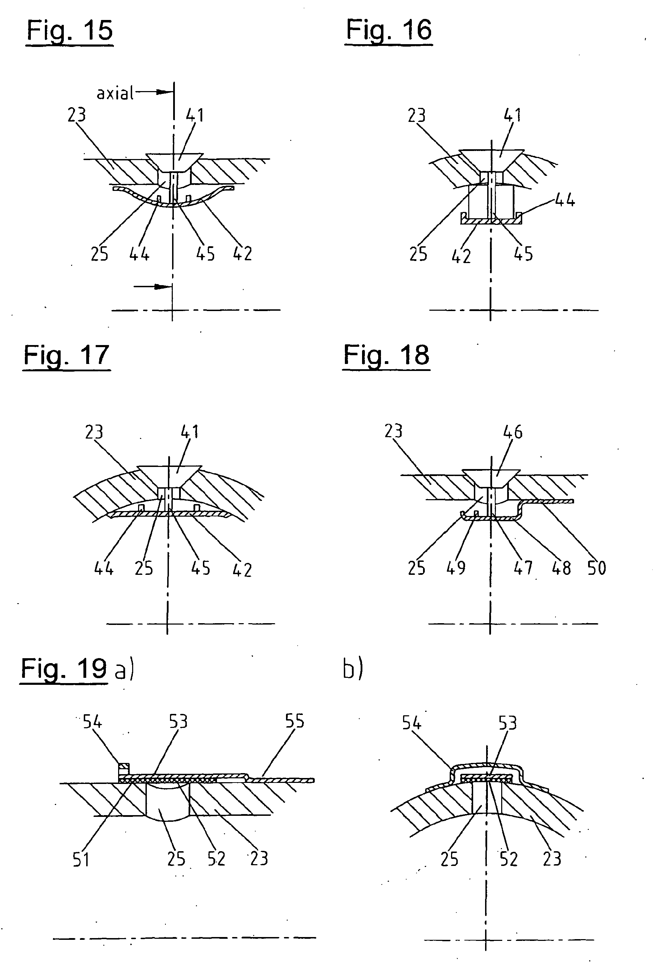

Die Figuren 15 und 16 zeigen Detailansichten eines elften Ausführungsbeispiels einer erfindungsgemäßen Vorrichtung zum Kühlen einer Reiblamellenanordnung. Es ist ein innen gefedertes Ventil als drehzahlabhängige Auslasseinrichtung vorgesehen. Die Federung des innen gefederten Ventils 41 ist mittels einer Blattfeder 42 realisiert, die sich im Wesentlichen in axialer Richtung erstreckt.

Ähnlich wie im vorstehend beschriebenen Ausführungsbeispiel sitzt der Ventilkörper des Ventils 41 bei niedrigen Drehzahlen an der Außenseite der Trommel 23 die Auslassöffnung 25 verschließend auf. Die innere Stirnfläche des Ventilkörpers trägt wiederum einen Stößel 45, welcher die Öffnung 25 zentral durchsetzt und anderenendseitig eine Blattfeder 42 trägt.

Die Blattfeder 42 ist in Richtung auf die Innenwandung der Stirnfläche der Trommel 23 gekrümmt und hält den Ventilkörper des Ventils 41 durch seine Federkraft bei niedrigen Drehzahlen in seiner geschlossenen Stellung.

Mit zunehmender Drehzahl erhöht sich der Öldruck innerhalb der Trommel 23 und damit die auf die Blattfeder 42 wirkende Kraft. Zusätzlich erhöhen sich die Fliehkräfte der Ventilkomponenten. Der Stößel 45 wird dadurch entgegen der Federkraft der Blattfeder 42 nach außen gedrückt, so dass der Ventilkopf des Ventils 41 die jeweilige Auslassöffnung 25 nach und nach freigibt. Um ein Verschließen der Auslassöffnungen 25 durch die Blattfeder 42 zu verhindern, trägt diese auf die Innenwandung der Stirnseite der Trommel 23 hin ausgerichtete Füßchen 44, welche dadurch die Ventilbewegung mit zunehmender Drehzahl anschlagbegrenzen.

Die Figur 17 zeigt eine Detailansicht eines weiteren zwölften Ausführungsbeispiels einer erfindungsgemäßen Vorrichtung zum Kühlen einer Reiblamellenanordnung. Ähnlich wie beim vorstehend beschriebenen Ausführungsbeispiel ist ein innen gefedertes Ventil 41 als drehzahlabhängige Auslasseinrichtung vorgesehen. Die Federung des innen gefederten Ventils 41 ist wiederum mittels einer Blattfeder 42 realisiert. Im Unterschied zum vorstehend beschriebenen Ausführungsbeispiel ist hier die Blattfeder 42 jedoch in Umfangsrichtung orientiert, wodurch sich eine kurze axiale Baulänge ergibt. Im Übrigen wird ein weitgehend identisches Ventilverhalten erreicht.

Die Figur 18 zeigt eine Detailansicht eines dreizehnten Ausführungsbeispiels einer erfindungsgemäßen Vorrichtung zum Kühlen einer Reiblamellenanordnung. Es ist ein innen gefedertes Ventil 46 als drehzahlabhängige Auslasseinrichtung vorgesehen. Die Federung des innen gefederten Ventils 46 ist nunmehr mittels einer Biegefeder 48 realisiert.

Wie in den vorstehend beschriebenen Ausführungsbeispielen mit Innenfederung sitzt auch hier der Ventilkörper des Ventils 46 auf der Außenseite der Stirnwandung der Trommel 23 die Auslassöffnung 25 verschließend auf. Der Ventilkopf wird innenseitig wiederum von einem die Auslassöffnung 25 zentral durchsetzenden Stößel 47 gehalten, welcher endseitig mit einem Ende einer Biegefeder 48 verbunden ist. Das andere Ende der Biegefeder 48 ist an der Trommel 23 befestigt (Befestigung 50).

Bei niedriger Drehzahl wird das Ventil 46 durch die Biegefeder 48 in der in der Figur 18 dargestellten Stellung gehalten. Mit zunehmender Drehzahl erhöhen sich wiederum der Öldruck in der Trommel 23 und die ventilbezogenen Fliehkräfte und damit die auf das freie Ende der Biegefeder 48 wirkende Kraft. Das Ventil 46 wird dadurch entgegen der Kraft der Biegefeder 48 zunehmend geöffnet. Wiederum sind Füßchen 49 vorgesehen, welche ein Verschließen der Auslassöffnung 25 durch die Biegefeder 48 verhindern.

Die Figur 19 zeigt eine Detailansicht eines vierzehnten Ausführungsbeispiels einer erfindungsgemäßen Vorrichtung zum Kühlen einer Reiblamellenanordnung. Es ist ein außen gefedertes Ventil 51 als drehzahlabhängige Auslasseinrichtung vorgesehen. Die Federung des außen gefederten Ventils 51 ist mittels einer Biegefeder 53 realisiert.

Die Figur 19a zeigt die Vorrichtung im Längsschnitt, die Figur 19b zeigt die Vorrichtung im Querschnitt.

Das Ventil entsprechend der Figur 19 umfasst eine Biegefeder 53, welche einendseitig an der Trommel 23 befestigt ist (Befestigung 55). Anderenendseitig trägt die Biegefeder 53 einen Dichtungsteller 52, welcher die Auslassöffnung 25 bei niedrigen Drehzahlen, wie in den Figuren 19 dargestellt, von außen verschließt.

Mit zunehmender Drehzahl erhöht sich der Innendruck in der Trommel 23. Damit erhöht sich die durch das Öl hervorgerufene Kraft auf die durch die Auslassöffnung 25 gebildete Fläche des Dichtungstellers 52 wirkende Kraft. Dadurch sowie durch die Fliehkräfte der Ventilkomponenten löst sich der Dichtungsteller 52 mit zunehmender Drehzahl von seinem Sitz entgegen der Federkraft der Biegefeder 53 und ermöglicht damit einen Öldurchfluss durch die Auslassöffnung 25.

Um eine Schädigung des Federelements 53 durch Überdehnung zu verhindern, ist ein das freie Ende der Biegefeder 53 übergreifender Bügel 54 vorgesehen, welcher die Bewegung dieses freien Endes der Biegefeder 53 anschlagbegrenzt.

### Bezugszeichenliste

- 1: Doppelkupplungssystem
- 2: äußere Kupplungseinheit
- 3: innere Kupplungseinheit
- 4: Drehachse
- 5: äußerer Lamellenträger
- 6: Antriebsflansch
- 7: innerer Lamellenträger
- 8: Reiblamellenanordnung
- 9: äußere Reiblamellen
- 10: innere Reiblamellen
- 11: äußerer Lamellenträger
- 12: innerer Lamellenträger
- 13: Reiblamellenanordnung
- 14: Trommel
- 15: Auslasseinrichtung
- 16: Einlasseinrichtung
- 17: Auslassöffnung
- 18: Überlauföffnung
- 19: Kühlmedium
- 20: Torus (Kühlmedium)
- 21: flacher Ring (Kühlmedium)
- 22: äußerer Lamellenträger
- 23: Trommel
- 24a: Schlitz
- 24b: Bohrung
- 25: Auslassöffnung
- 26: Überlauföffnung
- 27: Torus (Kühlmedium)
- 28: Verbindungsöffnung
- 29: Verbindungsöffnung
- 30: Verbindungsöffnung
- 31a: Schlitz
- 31b: Bohrung
- 32: Kühlmittelfluss
- 33: Pendelschieber
- 34: Federelement (Schraubenfeder)
- 35: Gelenk
- 36: Federgelenk
- 37: Fixierung
- 38: Ventil
- 39: Federelement (Schraubenfeder)
- 40: Bügel
- 41: Ventil
- 42: Federelement (Blattfeder)
- 43: Bügel
- 44: Füßchen
- 45: Stößel
- 46: Ventil
- 47: Stößel
- 48: Federelement (Biegefeder)
- 49: Füßchen
- 50: Befestigung
- 51: Ventil
- 52: Dichtungsteller
- 53: Federelement (Biegefeder)
- 54: Bügel
- 55: Befestigung
- 56: Stößel

## Patentansprüche

1. Vorrichtung zum Kühlen einer in einem Drehzahlbereich drehbaren Reiblamellenanordnung (8) einer Kupplung (1), mittels eines Kühlmediums (19), welche Mittel aufweist, durch welche die Menge des die Reiblamellenanordnung (8) umgebenden Kühlmediums (19) in Abhängigkeit von der Drehzahl der Reiblamellenanordnung (8) einstellbar ist,
**dadurch gekennzeichnet,**
**dass** die Mittel dergestalt sind, dass das Kühlmedium (19) bei niederen Drehzahlen einen die Reiblamellenanordnung (8) umgebenden Torus (20, 27) bildet, und dass die Reiblamellenanordnung (8) bei hohen Drehzahlen im wesentlichen nicht vom Kühlmedium (19) umgeben ist.

2. Vorrichtung nach Anspruch 1,
**dadurch gekennzeichnet,**
**dass** die Menge des die Reiblamellenanordnung (8) umgebenden Kühlmediums (19) durch die Wechselwirkung zwischen den Mitteln und der auf das Kühlmedium (19) einwirkenden Zentrifugalkraft einstellbar ist.

3. Vorrichtung nach einem der Ansprüche 1 oder 2,
**dadurch gekennzeichnet,**
**dass** bei PKW-Benzin-Motoren niedere Drehzahlen weniger als 25-40% der maximalen Betriebsdrehzahl und hohe Drehzahlen mehr als 25-40% der maximalen Betriebsdrehzahl betragen bzw. dass bei PKW-Diesel-Motoren niedere Drehzahlen weniger als 40-55% der maximalen Betriebsdrehzahl (nₘₐₓ) betragen und hohe Drehzahlen mehr als 40-55% der maximalen Betriebsdrehzahl (nₘₐₓ) betragen.

4. Vorrichtung nach einem der Ansprüche 1 bis 3,
**dadurch gekennzeichnet,**
**dass** die Mittel eine die Reiblamellenanordnung (8) aufnehmende Trommel (14, 23) sowie eine Einlasseinrichtung (16) und eine Auslasseinrichtung (15) umfassen, wobei das Kühlmedium (19) über die Einlasseinrichtung (16) der Trommel (14, 23) zuführbar und über die Auslasseinrichtung (15) aus der Trommel (14, 23) wegführbar ist.

5. Vorrichtung nach Anspruch 4,
**dadurch gekennzeichnet,**
**dass** die Reiblamellenanordnung (8) äußere (9) und innere Reiblamellen (10) hat, und dass die Trommel (14, 23) drehfest mit den äußeren (9) oder den inneren Reiblamellen (10) verbundenen ist.

6. Vorrichtung nach einem der Ansprüche 4 oder 5,
**dadurch gekennzeichnet,**
**dass** die Auslasseinrichtung (15) Auslassöffnungen (17a, 17b, 25) in der Trommel (14, 23) und die Einlasseinrichtung (16) Einlassöffnungen und / oder eine Pumpe aufweist.

7. Vorrichtung nach Anspruch 6,
**dadurch gekennzeichnet,**
**dass** die Querschnitte der Auslassöffnungen (17a, 17b, 25) und die Querschnitte der Einlassöffnungen und / oder die Förderleistung der Pumpe aufeinander angestimmt sind.

8. Vorrichtung nach Anspruch 7,
**dadurch gekennzeichnet,**
**dass** die Querschnitte der Auslassöffnungen (17a, 17b, 25) und / oder die Querschnitte der Einlassöffnungen drehzahlabhängig veränderbar sind.

9. Vorrichtung nach Anspruch 6, 7 oder 8,
**dadurch gekennzeichnet,**
**dass** Ventileinrichtungen (33, 38, 51, 41, 46) vorgesehen sind, mittels derer der Durchfluss durch die Querschnitte der Auslassöffnungen (17, 25) und/oder der Durchfluss durch die Querschnitte der Einlassöffnungen (16) regelbar oder steuerbar ist.

10. Vorrichtung nach Anspruch 9,
**dadurch gekennzeichnet,**
**dass** die Ventileinrichtungen als Pendelschieber (33) und/oder als außen gefederte Ventile (38, 51) und/oder als innen gefederte Ventile (41, 46) ausgebildet sind.

11. Vorrichtung nach einem der Ansprüche 4 bis 10,
**dadurch gekennzeichnet,**
**dass** die Trommel (14, 23) konzentrisch zu der die Reiblamellenanordnung lagernden Drehachse (4) angeordnet ist, und deren Stirnseiten jeweils durch Ringe gebildet werden, die sich in radialer Richtung zumindest im Bereich der Reiblamellen (9, 10) der Reiblamellenanordnung (8) erstrecken, so dass die Trommel (14, 23) einen zumindest die Reiblamellen (9, 10) umgreifenden Hohlraum bildet.

12. Vorrichtung nach Anspruch 11,
**dadurch gekennzeichnet,**
**dass** die Trommel (14) durch einen Abschnitt des Außenlamellenträgers (5) und durch einen Abschnitt des damit drehfest verbundenen Antriebflansches (6) gebildet wird.

13. Vorrichtung nach Anspruch 11,
**dadurch gekennzeichnet,**
**dass** die Trommel (23) als ein den Außenlamellenträger (22) und den Antriebsflansch (6) zumindest abschnittweise umgreifendes separates Bauteil ausgebildet ist.

14. Vorrichtung nach einem der Ansprüche 6 bis 13,
**dadurch gekennzeichnet,**
**dass** die Auslassöffnungen (17a, 17b, 25) radial außerhalb oder im Bereich des äußeren Radius der Reiblamellenanordnung (8) angeordnet sind.

15. Vorrichtung nach einem der Ansprüche 6 bis 14,
**dadurch gekennzeichnet,**
**dass** die Auslassöffnungen (17a, 17b) im Bereich des äußeren Radius der inneren Reiblamellen angeordnet sind.

16. Vorrichtung nach einem der Ansprüche 6 bis 15,
**dadurch gekennzeichnet,**
**dass** die Auslassöffnungen (17a, 17b, 25) als Drosseln (17a, 25) oder Blenden (17b) ausgebildet sind.

17. Vorrichtung nach einem der Ansprüche 6 bis 16,
**dadurch gekennzeichnet,**
**dass** zwischen einer und zwanzig Auslassöffnungen (17a, 17b, 25), insbesondere zwischen vier und acht Auslassöffnungen (17a, 17b, 25) vorhanden sind.

18. Vorrichtung nach einem der Ansprüche 6 bis 17,
**dadurch gekennzeichnet,**
**dass** die Auslasseinrichtung (15) Überlauföffnungen (18, 26) aufweist, die in radialer Richtung näher an der Drehachse (4) angeordnet sind als die Auslassöffnungen (17a, 17b, 25).

19. Vorrichtung nach Anspruch 18,
**dadurch gekennzeichnet,**
**dass** die Überlauföffnungen (18, 26) an zumindest einem der Ringe der Trommel (14, 23) angeordnet sind.

20. Vorrichtung nach einem der Ansprüche 18 oder 19,
**dadurch gekennzeichnet,**
**dass** alle Überlauföffnungen (18, 26) und / oder alle Auslassöffnungen (17a, 17b, 25) jeweils auf dem gleichen Radius in Bezug zur Drehachse (4) angeordnet sind.

21. Vorrichtung nach einem der Ansprüche 18 bis 20,
**dadurch gekennzeichnet,**
**dass** die Überlauföffnungen (18, 26) im Bereich des inneren Radius der Reiblamellenanordnung (8) angeordnet sind.

22. Vorrichtung nach einem der Ansprüche 18 bis 21,
**dadurch gekennzeichnet,**
**dass** zwischen einer und zwanzig Überlauföffnungen (18, 26), insbesondere zwischen vier und acht Überlauföffnungen (18, 26) vorgesehen sind.

23. Vorrichtung nach einem der Ansprüche 18 bis 22,
**dadurch gekennzeichnet,**
**dass** die Auslassöffnungen (17a, 17b, 25) und die Überlauföffnungen (18, 26) derart aufeinander abgestimmt sind, dass bei niederen Drehzahlen ein großer Teil des zugeführten Kühlmediums (19), insbesondere 60% bis 100%, über die Überlauföffnungen (18, 26) wegführbar ist, und dass bei hohen Drehzahlen das gesamte zugeführte Kühlmedium (19) über die Auslassöffnungen (17a,17b) wegführbar ist.

24. Vorrichtung nach einem der Ansprüche 18 bis 23,
**dadurch gekennzeichnet,**
**dass** die Querschnitte der Überlauföffnungen (18, 26) drehzahlabhängig veränderbar sind.

25. Vorrichtung nach einem der Ansprüche 18 bis 24,
**dadurch gekennzeichnet,**
**dass** Ventileinrichtungen vorgesehen sind, mittels derer der Durchfluss durch die Querschnitte der Überlauföffnungen (18, 26) regelbar oder steuerbar ist.

26. Vorrichtung nach Anspruch 25,
**dadurch gekennzeichnet,**
**dass** die Ventileinrichtungen als Pendelschieber und/oder au-ßen gefederte Ventile und/oder innen gefederte Ventile ausgebildet sind.

27. Vorrichtung nach einem der Ansprüche 1 bis 26,
**dadurch gekennzeichnet,**
**dass** der Trommel (14, 23) ein Kühlmediumfluss von 3 bis 15 Liter pro Minute, insbesondere von 4 bis 7 Liter pro Minute, zuführbar ist.

28. Verwendung einer Vorrichtung zum Kühlen einer Reiblamellenanordnung nach einem der Ansprüche 1 bis 27 in einer Doppelkupplung.

29. Verwendung nach Anspruch 28,
**dadurch gekennzeichnet,**
**dass** die Doppelkupplung (1) eine konzentrische Doppelkupplung ist, bei der die Reiblamellen der einen Kupplung radial kleiner sind als die Reiblamellen der anderen Kupplung.

30. Verwendung nach einem der Ansprüche 28 oder 29,
**dadurch gekennzeichnet,**
**dass** die Vorrichtung zur Kühlung Bestandteil einer Anfahrkupplung ist.

31. Verfahren zum Kühlen einer Reiblamellenanordnung (8) einer Kupplung (1) mittels eines Kühlmediums (19), bei dem bei niederen Drehzahlen die Menge des Kühlmediums (19) so eingestellt wird, dass das Kühlmedium (19) die Reiblamellenanordnung (8) im wesentlichen vollständig umgibt, und dass bei hohen Drehzahlen die Menge des Kühlmediums (19) so eingestellt wird, dass die Reiblamellenanordnung (8) im wesentlichen nicht von dem Kühlmedium (19) umgeben ist.

32. Verfahren nach Anspruch 31,
**dadurch gekennzeichnet,**
**dass** die Menge des die Reiblamellenanordnung (8) umgebenden Kühlmediums (19) in Abhängigkeit des der Reiblamellenanordnung (8) zugeführten und von dieser weggeführten Kühlmediums (19) eingestellt wird, wobei die Menge des weggeführten Kühlmediums (19) mit durch die auf das Kühlmedium (19) und gegebenenfalls Ventile (33, 38, 41, 46, 51) wirkende Zentrifugalkraft beeinflusst wird.

## Claims

1. Apparatus for cooling a friction disc arrangement (8), rotatable in a rotational-speed range, of a clutch (1) by means of a cooling medium (19), the apparatus having means by which the amount of cooling medium (19) surrounding the friction disc arrangement (8) is adjustable in dependence on the rotational speed of the friction disc arrangement (8),
**characterised**
**in that** the means are such that at low rotational speeds the cooling medium (19) forms a torus (20, 27) surrounding the friction disc arrangement (8), and that at high rotational speeds the friction disc arrangement (8) is substantially not surrounded by the cooling medium (19).

2. Apparatus according to Claim 1,
**characterised**
**in that** the amount of cooling medium (19) surrounding the friction disc arrangement (8) is adjustable by the interaction between the means and the centrifugal force acting on the cooling medium (19).

3. Apparatus according to one of Claims 1 and 2,
**characterised**
**in that**, in the case of petrol-engine passenger cars, low rotational speeds are less than 25-40% of the maximum operating rotational speed and high rotational speeds are more than 25-40% of the maximum operating rotational speed or in that, in the case of diesel-engine passenger cars, low rotational speeds are less than 40-55% of the maximum operating rotational speed (nₘₐₓ) and high rotational speeds are more than 40-55% of the maximum operating rotational speed (nₘₐₓ).

4. Apparatus according to one of Claims 1 to 3,
**characterised**
**in that** the means comprise a drum (14, 23) receiving the friction disc arrangement (8), as well as an inlet device (16) and an outlet device (15), it being possible for the cooling medium (19) to be supplied to the drum (14, 23) via the inlet device (16) and to be discharged from the drum (14, 23) via the outlet device (15).

5. Apparatus according to Claim 4,
**characterised**
**in that** the friction disc arrangement (8) has outer friction discs (9) and inner friction discs (10), and in that the drum (14, 23) is connected in a rotationally fixed manner to the outer friction discs (9) or the inner friction discs (10).

6. Apparatus according to one of Claims 4 and 5,
**characterised**
**in that** the outlet device (15) has outlet openings (17a, 17b, 25) in the drum (14, 23) and the inlet device (16) has inlet openings and/or a pump.

7. Apparatus according to Claim 6,
**characterised**
**in that** the cross-sections of the outlet openings (17a, 17b, 25) and the cross-sections of the inlet openings and/or the delivery rate of the pump are coordinated with one another.

8. Apparatus according to Claim 7,
**characterised**
**in that** the cross-sections of the outlet openings (17a, 17b, 25) and/or the cross-sections of the inlet openings are variable in dependence on the rotational speed.

9. Apparatus according to Claim 6, 7 or 8,
**characterised**
**in that** valve devices (33, 38, 51, 41, 46) are provided, by means of which the throughflow through the cross-sections of the outlet openings (17, 25) and/or the throughflow through the cross-sections of the inlet openings (16) can be regulated or controlled.

10. Apparatus according to Claim 9,
**characterised**
**in that** the valve devices are designed as swing valves (33) and/or as externally sprung valves (38, 51) and/or as internally sprung valves (41, 46).

11. Apparatus according to one of Claims 4 to 10,
**characterised**
**in that** the drum (14, 23) is arranged concentrically with respect to the axis of rotation (4) on which the friction disc arrangement is mounted, and its end faces are each formed by rings which extend, in the radial direction, at least in the region of the friction discs (9, 10) of the friction disc arrangement (8), so that the drum (14, 23) forms a hollow space encompassing at least the friction discs (9, 10).

12. Apparatus according to Claim 11,
**characterised**
**in that** the drum (14) is formed by a portion of the outer-disc carrier (5) and by a portion of the drive flange (6) connected in a rotationally fixed manner thereto.

13. Apparatus according to Claim 11,
**characterised**
**in that** the drum (23) is designed as a separate component encompassing at least portions of the outer-disc carrier (22) and the drive flange (6).

14. Apparatus according to one of Claims 6 to 13,
**characterised**
**in that** the outlet openings (17a, 17b, 25) are arranged radially outside or in the region of the outer radius of the friction disc arrangement (8).

15. Apparatus according to one of Claims 6 to 14,
**characterised**
**in that** the outlet openings (17a, 17b) are arranged in the region of the outer radius of the inner friction discs.

16. Apparatus according to one of Claims 6 to 15,
**characterised**
**in that** the outlet openings (17a, 17b, 25) are designed as throttles (17a, 25) or apertures (17b).

17. Apparatus according to one of Claims 6 to 16,
**characterised**
**in that** between one and twenty outlet openings (17a, 17b, 25), in particular between four and eight outlet openings (17a, 17b, 25), are present.

18. Apparatus according to one of Claims 6 to 17,
**characterised**
**in that** the outlet device (15) has overflow openings (18, 26) which are arranged, in the radial direction, closer to the axis of rotation (4) than the outlet openings (17a, 17b, 25).

19. Apparatus according to Claim 18,
**characterised**
**in that** the overflow openings (18, 26) are arranged on at least one of the rings of the drum (14, 23).

20. Apparatus according to one of Claims 18 and 19,
**characterised**
**in that** all overflow openings (18, 26) and/or all outlet openings (17a, 17b, 25) are respectively arranged on the same radius in relation to the axis of rotation (4).

21. Apparatus according to one of Claims 18 to 20,
**characterised**
**in that** the overflow openings (18, 26) are arranged in the region of the inner radius of the friction disc arrangement (8).

22. Apparatus according to one of Claims 18 to 21,
**characterised**
**in that** between one and twenty overflow openings (18, 26), in particular between four and eight overflow openings (18, 26), are provided.

23. Apparatus according to one of Claims 18 to 22,
**characterised**
**in that** the outlet openings (17a, 17b, 25) and the overflow openings (18, 26) are coordinated with one another such that at low rotational speeds a large part of the supplied cooling medium (19), in particular 60% to 100%, can be discharged via the overflow openings (18, 26), and that at high rotational speeds the entire cooling medium (19) can be discharged via the outlet openings (17a, 17b).

24. Apparatus according to one of Claims 18 to 23,
**characterised**
**in that** the cross-sections of the overflow openings (18, 26) can be changed in dependence on the rotational speed.

25. Apparatus according to one of Claims 18 to 24,
**characterised**
**in that** valve devices are provided, by means of which the throughflow through the cross-sections of the overflow openings (18, 26) can be regulated or controlled.

26. Apparatus according to Claim 25,
**characterised**
**in that** the valve devices are designed as swing valves and/or externally sprung valves and/or internally sprung valves.

27. Apparatus according to one of Claims 1 to 26,
**characterised**
**in that** a cooling-medium flow of 3 to 15 litres per minute, in particular of 4 to 7 litres per minute, can be supplied to the drum (14, 23).

28. Use of an apparatus for cooling a friction disc arrangement according to one of Claims 1 to 27 in a double clutch.

29. Use according to Claim 28,
**characterised**
**in that** the double clutch (1) is a concentric double clutch, in which the friction discs of one clutch are radially smaller than the friction discs of the other clutch.

30. Use according to one of Claims 28 and 29,
**characterised**
**in that** the apparatus for cooling is a component part of a starting clutch.

31. Method for cooling a friction disc arrangement (8) of a clutch (1) by means of a cooling medium (19), in which at low rotational speeds the amount of cooling medium (19) is adjusted such that the cooling medium (19) surrounds the friction disc arrangement (8) substantially completely, and at high rotational speeds the amount of cooling medium (19) is adjusted such that the friction disc arrangement (8) is substantially not surrounded by the cooling medium (19).

32. Method according to Claim 31,
**characterised**
**in that** the amount of cooling medium (19) surrounding the friction disc arrangement (8) is adjusted in dependence on the cooling medium (19) supplied to and discharged from the friction disc arrangement (8), the amount of discharged cooling medium (19) also being influenced by the centrifugal force acting on the cooling medium (19) and optionally valves (33, 38, 41, 46, 51).

## Revendications

1. Dispositif pour refroidir un agencement de lamelles de friction (8), susceptible de tourner dans une plage de vitesses de rotation, d'un embrayage (1), au moyen d'un fluide de refroidissement (19), présentant des moyens à l'aide desquels la quantité de fluide de refroidissement (19) entourant l'agencement de lamelles de friction (8) est réglable en fonction de la vitesse de rotation de l'agencement de lamelles de friction (8),
**caractérisé en ce que**
les moyens sont configurés de manière que le fluide de refroidissement (19), pour les faibles vitesses de rotation, forment un tore (20, 27) entourant l'agencement de lamelles de friction (8), et **en ce que** l'agencement de lamelles de friction (8), pour les hautes vitesses de rotation, ne soit pratiquement pas entouré par le fluide de refroidissement (19).

2. Dispositif selon la revendication 1, **caractérisé en ce que** la quantité de fluide de refroidissement (19) entourant l'agencement de lamelles de friction (8) est réglable par l'interaction entre les moyens et la force centrifuge agissant sur le fluide de refroidissement (19).

3. Dispositif selon l'une des revendications 1 ou 2,
**caractérisé en ce que**
pour des moteurs à essence pour voitures particulières, des faibles vitesses de rotation sont inférieures à 25 à 40 % de la vitesse de rotation de fonctionnement maximale et des hautes vitesses de rotation sont supérieures à 25 à 40 % de la vitesse de rotation de fonctionnement maximale, respectivement **en ce que**, pour des moteurs diesel pour voitures particulières, des faibles vitesses de rotation sont inférieures à 40 à 55 % de la vitesse de rotation de fonctionnement maximale (nₘₐₓ) et des hautes vitesses de rotation sont supérieures à 40 à 55 % de la vitesse de rotation de fonctionnement maximale (nₘₐₓ).

4. Dispositif selon l'une des revendications 1 à 3,
**caractérisé en ce que**
les moyens comprennent un tambour (14, 23) recevant l'agencement de lamelles de friction (8) ainsi qu'un dispositif d'admission (16) et un dispositif d'évacuation (15), le fluide de refroidissement (19) étant susceptible d'être amené au tambour (14, 23) par le dispositif d'admission (16) et étant susceptible d'être évacué du tambour (14, 23) par le dispositif d'évacuation (15).

5. Dispositif selon la revendication 4,
**caractérisé en ce que**
l'agencement de lamelles de friction (8) comprend des lamelles de friction extérieures (9) et intérieures (10), et **en ce que** le tambour (14, 23) est relié de façon assujettie en rotation aux lamelles de friction extérieures (9) ou aux lamelles de friction intérieures (10).

6. Dispositif selon l'une des revendications 4 ou 5,
**caractérisé en ce que**
le dispositif d'évacuation (15) présente des ouvertures d'évacuation (17a, 17b, 25) dans le tambour (14, 23), et le dispositif d'admission (16) présente des ouvertures d'admission et/ou une pompe.

7. Dispositif selon la revendication 6,
**caractérisé en ce que**
les sections transversales des ouvertures d'évacuation (17a, 17b, 25) et les sections transversales des ouvertures d'admission et/ou la puissance de transfert de la pompe sont mutuellement adaptées.

8. Dispositif selon la revendication 7,
**caractérisé en ce que**
les sections transversales des ouvertures d'évacuation (17a, 17b, 25) et/ou les sections transversales des ouvertures d'admission sont modifiables en fonction de la vitesse de rotation.

9. Dispositif selon la revendication 6, 7 ou 8,
**caractérisé en ce que**
des dispositifs à soupapes (33, 38, 51, 41, 46) sont prévus, au moyen desquels le débit traversant les sections transversales des ouvertures d'évacuation (17, 25) et/ou le débit traversant les section transversales des ouvertures d'admission (16) est/sont susceptible(s) d'être réglé(s) ou commandé(s).

10. Dispositif selon la revendication 9,
**caractérisé en ce que**
les dispositifs à soupapes sont réalisés sous la forme de registres pendulaires (33) et/ou sous forme de soupapes (38, 51) montées élastiquement extérieurement, et/ou sous forme de soupapes (41, 46) montées élastiquement intérieurement.

11. Dispositif selon l'une des revendications 4 à 10,
**caractérisé en ce que**
le tambour (14, 23) est disposé concentriquement par rapport à l'axe de rotation (4) du montage en palier de l'agencement de lamelles de friction, et ses faces frontales sont chacune formées par des anneaux s'étendant en direction radiale au moins dans la zone des lamelles de friction (9, 10) de l'agencement de lamelles de friction (8), faisant que le tambour (14, 23) forme un espace creux entourant au moins les lamelles de friction (9, 10).

12. Dispositif selon la revendication 11,
**caractérisé en ce que**
le tambour (14) est formé par un tronçon du support de lamelles de friction (5) et par un tronçon de la bride d'entraînement (6) lui étant reliée en rotation.

13. Dispositif selon la revendication 11,
**caractérisé en ce que**
le tambour (23) est réalisé sous la forme de composants séparés, entourant, au moins par tronçons, le support de lamelles extérieur (22) et la bride d'entraînement (6).

14. Dispositif selon l'une des revendications 6 à 13,
**caractérisé en ce que**
les ouvertures d'évacuation (17a, 17b, 25) sont disposées radialement à l'extérieur ou dans la zone du rayon extérieur de l'agencement de lamelles de friction (8).

15. Dispositif selon l'une des revendications 6 à 14,
**caractérisé en ce que**
les ouvertures d'évacuation (17a, 17b) sont disposées dans la zone du rayon extérieur des lamelles de friction intérieures.

16. Dispositif selon l'une des revendications 6 à 15,
**caractérisé en ce que**
les ouvertures d'évacuation (17a, 17b, 25) sont réalisées sous la forme d'organes d'étranglement (17a, 25) ou de diaphragmes (17b).

17. Dispositif selon l'une des revendications 6 à 16,
**caractérisé en ce que**,
entre une et vingt ouvertures d'évacuation (17a, 17b, 25), en particulier entre quatre et huit ouvertures d'évacuation (17a, 17b, 25), sont prévues.

18. Dispositif selon l'une des revendications 6 à 17,
**caractérisé en ce que**
le dispositif d'évacuation (15) présente des ouvertures de trop-plein (18, 26), disposées en direction radiale plus près de l'axe de rotation (4) que le sont les ouvertures d'évacuation (17a, 17b, 25).

19. Dispositif selon la revendication 18,
**caractérisé en ce que**
les ouvertures de trop-plein (18, 26) sont disposées sur au moins l'un des anneaux du tambour (14, 23).

20. Dispositif selon l'une des revendications 18 ou 19,
**caractérisé en ce que**
toutes les ouvertures de trop-plein (18, 26) et/ou toutes les ouvertures d'évacuation (17a, 17b, 25) sont respectivement disposées sur le même rayon par rapport à l'axe de rotation (4).

21. Dispositif selon l'une des revendications 18 à 20,
**caractérisé en ce que**
les ouvertures de trop-plein (18, 26) sont disposées dans la zone du rayon intérieur de l'agencement de lamelles de friction (8).

22. Dispositif selon l'une des revendications 18 à 21,
**caractérisé en ce que**,
entre une et vingt ouvertures de trop-plein (18, 26), en particulier entre quatre et huit ouvertures de trop-plein (18, 26), sont prévues.

23. Dispositif selon l'une des revendications 18 à 22,
**caractérisé en ce que**
les ouvertures d'évacuation (17a, 17b, 25) et les ouvertures de trop-plein (18, 26) sont adaptées mutuellement, de manière que, en cas de basses vitesses de rotation, une grande partie du fluide de refroidissement (19) amené, en particulier de 60 % à 100 %, puisse être évacuée par les ouvertures de trop-plein (18, 26), et **en ce que**, en cas de hautes vitesses de rotation, l'ensemble du fluide de refroidissement (19) amené puisse être évacué par les ouvertures d'évacuation (17a, 17b).

24. Dispositif selon l'une des revendications 18 à 23,
**caractérisé en ce que**
les sections transversales des ouvertures de trop-plein (18, 26) sont modifiables en fonction de la vitesse de rotation.

25. Dispositif selon l'une des revendications 18 à 24,
**caractérisé en ce que**
sont prévus des dispositifs à soupapes, au moyen desquels le débit traversant les sections transversales des ouvertures de trop-plein (18, 26) est susceptible d'être régulé ou commandé.

26. Dispositif selon la revendication 25,
**caractérisé en ce que**
les dispositifs à soupapes sont réalisés sous la forme de registres pendulaires et/ou sous la forme de soupapes à montage élastique extérieur et/ou sous la forme de soupapes à montage élastique intérieur.

27. Dispositif selon l'une des revendications 1 à 26,
**caractérisé en ce que**,
au tambour (14, 23), est susceptible d'être amené un débit en fluide de refroidissement de 3 à 15 litres par minute, en particulier de 4 à 7 litres par minute.

28. L'utilisation d'un dispositif pour refroidir un agencement de lamelles de friction selon l'une des revendications 1 à 27, dans un embrayage double.

29. Dispositif selon la revendication 28,
**caractérisé en ce que**
l'embrayage double (1) est un embrayage double concentrique, dans lequel les lamelles de friction d'un premier embrayage sont radialement plus petites que les lamelles de friction de l'autre embrayage.

30. Utilisation selon l'une des revendications 28 ou 29, **caractérisé en ce que** le dispositif de refroidissement fait partie d'un embrayage de lancement au démarrage.

31. Procédé de refroidissement d'un agencement de lamelles de friction (8) d'un embrayage (1) à l'aide d'un fluide de refroidissement (19), pour lequel, pour de basses vitesses de rotation, la quantité de fluide de refroidissement (19) est réglée, de manière que le fluide de refroidissement (19) entoure pratiquement complètement l'agencement de lamelles de friction (8) et, en cas de hautes vitesses de rotation, la quantité de fluide de refroidissement (19) est réglée de manière que l'agencement de lamelles de friction (8) ne soit pas pratiquement pas entouré par le fluide de refroidissement (19).

32. Procédé selon la revendication 31,
**caractérisé en ce que**
la quantité de fluide de refroidissement (19) entourant l'agencement de lamelles de friction (8) est réglée en fonction du fluide de refroidissement (19), amené à l'agencement de lamelles de friction (8) et évacué de celui-ci, la quantité de fluide de refroidissement (19) évacuée étant influencée par la force centrifuge agissant sur le fluide de refroidissement (19) et, le cas échéant, les soupapes (33, 38, 41, 46, 51).
